# EUROPÄISCHE PATENTSCHRIFT

(11) **EP 3 472 574 B1**
(45) Veröffentlichungstag und Bekanntmachung des Hinweises auf die Patenterteilung: **03.03.2021**
(21) Anmeldenummer: 17715054.7
(22) Anmeldetag: 14.03.2017
(51) Int. Cl.: G01F 11/00, B01J 8/00, G01F 11/28, H05K 3/00, G01F 15/12

(54) **VORRICHTUNG ZUR PULVERDOSIERUNG FÜR CHEMISCHE PRODUKTIONSPROZESSE UNTER REINRAUMBEDINGUNGEN, VERWENDUNG DERSELBEN UND ZUDOSIERUNGSVERFAHREN**
DEVICE FOR METERING POWDER FOR CHEMICAL PRODUCTION PROCESSES UNDER CLEAN ROOM CONDITIONS, USE OF SAME, AND METERING METHOD
PROCÉDÉ DE DOSAGE DE POUDRE POUR DES PROCESSUS DE PRODUCTION CHIMIQUES DANS DES CONDITIONS DE SALLE BLANCHE, UTILISATION DE CE PROCÉDÉ ET PROCÉDÉ D'ADDITION DOSÉE

(30) Priorität: 20.06.2016 DE 102016111214
(43) Veröffentlichungstag der Anmeldung: 24.04.2019
(60) Teilanmeldung: 19212089.7
(73) Patentinhaber: ancosys GmbH, 72124 Pliezhausen (DE)
(72) Erfinder: STAHL, Jürg, 8400 Winterthur (CH); POPOVA, Irene, Beacon New York 12508 (US); RÜCKL, Christian, 72124 Pliezhausen (DE)
(74) Vertreter: Mammel und Maser
(86) Internationale Anmeldenummer: PCT/EP2017/055944
(87) Internationale Veröffentlichungsnummer: WO 2017/220219

(56) Entgegenhaltungen:
- EP-A1- 2 311 513
- DE-A1- 3 026 816
- DE-A1-102005 005 359
- FR-A1- 2 219 894
- US-A- 4 850 978
- US-A1- 2009 078 194

## Beschreibung

Die vorliegende Erfindung betrifft eine Vorrichtung zur Pulverdosierung für chemische Produktionsprozesse unter Reinraumbedingungen, die Verwendung der Vorrichtung zur Pulverdosierung und Verfahren zur Herstellung chemischer Produkte unter Verwendung dieser Vorrichtung.

In chemischen Produktionsprozessen wie beispielsweise dem Beschichten oder Galvanisieren, dem Beizen, Entfetten, Ätzen, bei Fällungen etc. werden Gemische von verschiedensten Substanzen eingesetzt. Die Konzentrationen der betreffenden Substanzen müssen in einem engen Prozessfenster gehalten werden, um eine immer gleiche Produktionsqualität sicherzustellen. Da nicht alle Substanzen einem gleichen Verbrauch unterliegen, muss die Konzentration der einzelnen Substanzen bestimmt und je nach Abweichung vom Sollwert ergänzt werden. Die Nachdosierung wird in sehr vielen Prozessen in flüssiger Form durchgeführt.

Der Vorteil von Flüssigkeiten ist die einfache Dosierung mittels Pumpen. Diese sind sehr einfach zu steuern und sind, abhängig vom Volumen, das pro Zeiteinheit benötigt wird, einfach zu skalieren. Da die zuzudosierenden Stoffe in gelöster, flüssiger Form vorliegen müssen, wird dem Prozess entweder Wasser oder ein anderes Lösemittel als Hauptbestandteil zugegeben. Über einen längeren Zeitraum kann dies zu nicht optimalem Verhalten des Prozesses führen. Auch ist das Transportgewicht der Lösung um ein Vielfaches höher als das der reinen gelösten Substanz, die benötigt wird. Dies führt zu Mehrkosten und größeren Umweltbelastungen.

In vielen Fällen werden deshalb Feststoffe wie Pulver oder Granulate zur Ergänzung des Prozesses verwendet. Damit können eine unnötige Belastung des Prozesses mit anderen Stoffen (Wasser, Lösemittel) und das Transportgewicht stark reduziert werden. Auch ist die Haltbarkeit eines Pulvers in der Regel wesentlich länger als die eines Flüssigkonzentrats. Die oben erwähnten Nachteile beim Dosieren in flüssiger Form können den höheren technischen Aufwand, in einem Prozess Pulver zu applizieren, rechtfertigen. Allerdings können beim Nachdosieren mit Pulver Staubentwicklung, die Gefahr der Verunreinigung der Umgebung beim Überführen des Pulvers aus einem Behältnis in den Prozess und auch die Gefährdung der Gesundheit von Personen auftreten.

Üblicherweise erfolgt die Dosierung von Pulvern mit Schnecken und Förderbändern jeglicher Größe. Nachteilig an diesen Transportvorrichtungen ist, dass diese eine Vielzahl sich bewegender Teile aufweisen, was zu einem Materialabrieb der Transportvorrichtung führt. Ebenso besteht die Gefahr, dass dieser Abrieb und die verwendeten Schmierstoffe das zu applizierende Pulver verunreinigen. Für viele Anwendungen sind die Verunreinigungen so klein, dass dies weder für die Produktion noch für die Umgebung eine Rolle spielt.

In Anwendungen wie der pharmazeutischen oder der Halbleiterindustrie hingegen, in denen Verunreinigungen in kleinsten Mengen vermieden werden müssen, ist dies allerdings eine nicht zu ignorierende Prozessunsicherheit.

Eine Vorrichtung zur Dosierung von Pulver mit einem Behälter mit einem Verschlusskopf und einer Behälteraufnahme ist aus der US 2009/0078194 A1 bekannt.

In der pharmazeutischen wie in der Halbleiterindustrie wird unter Reinraumbedingungen produziert, und unter Reinraumbedingungen stellt eine Staubentwicklung jeglicher Art ein großes Problem dar. In Reinräumen nach ISO1 bis ISO4 (nach ISO 14644-1) dürfen keine Partikel ≥5 µm generiert werden bzw. vorhanden sein.

Auch werden immer mehr Stoffe als gesundheitsschädlich identifiziert und entsprechend eingestuft. Leider gibt es nicht für alle diese Stoffe einen unschädlichen Ersatzstoff. Somit ist es sehr wichtig, das Personal vor Gesundheitsgefährdungen zu schützen. Werden bedenkliche Stoffe in Pulverform in einem Produktionsprozess appliziert, so muss der Austritt von Pulver auf jeden Fall vermieden werden, wie sich aus dem nachfolgenden Beispiel der Dosierung von kristalliner Borsäure zu galvanischen Nickelelektrolyten ergibt:

Ein wesentlicher Bestandteil der Nickelbäder ist Borsäure in Konzentrationen von bis zu 45 g/l. Im Juni 2010 wurde Borsäure durch die ECHA auf die Kandidatenliste für SVHC (substance of very high concern) aufgenommen. Nach Inkrafttreten der GHS-Verordnung 1272/2008/EG und der REACH-Änderungs-VO 790/2009/EG wurde Borsäure als reproduktionstoxisch gekennzeichnet. Auch Gemische, die Borsäure in einer Konzentration von >5,5 % enthalten, sind nach der GHS-Verordnung als reproduktionstoxisch zu kennzeichnen. Leider sind noch keine Ersatzstoffe für diese Anwendungen gefunden worden. Vernickeln ist ein weit verbreitetes Oberflächen-Veredelungsverfahren und wird in vielen verschieden Industrien, wie der Automobil- und Leiterplattenindustrie, verwendet. Da die Löslichkeit von Borsäure 47 g/l in Wasser bei 20 °C sehr nahe an der Sollkonzentration des Prozesses liegt, kann Borsäure nicht als Lösung ergänzt werden - zumindest dann nicht, wenn die Sollkonzentration größer als 25 g/l ist. Für Prozesse mit hoher Borsäure-Konzentration ist Stand der Technik, dass die Zugabe manuell mit kristalliner Borsäure geschieht. Das Personal ist dadurch einer ständigen Gefahr ausgesetzt. Hier wäre ein Feststoff-Dosierverfahren das Mittel der Wahl, um das Personal vor den Gefahren zu schützen.

Die gleichen Nickelelektrolyte werden auch in der Halbleiterindustrie eingesetzt, wo sowohl der Schutz des Personals und der Reinräume unumgänglich ist.

Ein weiteres Beispiel für die Vorteile der Pulverdosierung betrifft die Wafer-Beschichtung mit Zinn oder einer Zinnlegierung in der Halbleiterindustrie:

Die Zinn- und Zinnlegierungsabscheidung auf Wafern ist in den letzten zehn Jahren stark angestiegen. Im Wesentlichen werden zwei Zinnprozesse in großem Stil eingesetzt: die Abscheidung von Reinzinn und von Zinnlegierungen. Bei den Zinnlegierungen wird am häufigsten die Legierung SnAg (Zinn, Silber) angewandt, wobei dem Zinn auch andere Legierungsbestandteile wie zum Beispiel Bismut oder Kupfer beigemengt werden können. Bei allen Anwendungen sowohl bei Reinzinn als auch bei Zinnlegierungen werden typischerweise 1 g bis 6 g Zinn pro Wafer abgeschieden. Den SnAg-Prozess mit löslichen Zinnanoden zu betreiben, ist wegen der unkontrollierten/unkontrollierbaren Abscheidung von Silber (Immersion aufgrund der unterschiedlichen elektrochemischen Potenziale der beiden Metalle) nicht möglich, deshalb werden in der Regel inerte Anoden eingesetzt. Eine typische Produktionsanlage (Plater) hat einen Durchsatz von 150 bis 400 Wafern pro Tag, abhängig von der Anzahl der vorhandenen Abscheidekammern und Abscheidezeiten. Das heißt, es werden pro Tag und Plater zwischen 450 g und 2400 g Zinn abgeschieden. Im Handel sind Nachdosierlösungen mit einer Konzentration von 200 g/l bis 400 g/l Sn²⁺ in MSA (Methansulfonsäure) gelöst, erhältlich. Damit müssen pro Tag und Tank 2 bis 12 I Metallkonzentrate nachdosiert werden. Dies führt dazu, dass der Tank nach einer gewissen Zeit überlaufen würde. Um dies zu vermeiden, wird eine dem nachzudosierenden Volumen entsprechende Menge an Elektrolyt aus dem Tank abgesaugt und in der Regel dem Abfall zugeführt. Im besten Fall wird dieser "Abfall-Elektrolyt" aufgearbeitet. Recycling von Zinn ist meist aus logistischen Gründen oder infolge fehlender Infrastruktur aufwendig und daher nicht wirtschaftlich.

Für die meisten Anwendungen in der Wafer-Beschichtung wird ausschließlich sogenanntes low -Zinn verwendet. Die Emissionsrate an α-Teilchen ist typisch kleiner 0.001 cph/cm². Da low -Zinn in der Herstellung sehr teuer ist und die Herstellung der flüssigen Konzentrate den Preis noch weiter in die Höhe treibt, ist es aus Kostengründen anzustreben, Abfall zu vermeiden. Auch aus umwelttechnischer Sicht wäre dies wünschenswert.

Die Reaktionsgleichungen (unter Vernachlässigung des Legierungsmetalls) sind wie folgt:
Anode: 6H₂O → O₂ + 4H₃O⁺ + 4e-
Kathode: 2 Sn²⁺ + 4 CH₃SO₃⁻ + 4e⁻ → 2 Sn + 4 CH₃SO₃⁻

An der inerten Anode wird Wasser aufgespalten (elektrolysiert) und dabei wird freie Säure (H₃O⁺) gebildet. Dadurch steigt der freie Säuregehalt kontinuierlich an. An der Kathode werden die Zinn-Ionen zu elementarmem Zinn reduziert. Stand der Technik ist, dass reduzierte Zinn als Sn²⁺ Methansulfonat in MSA Methansulfonsäure nachzudosieren.

Dadurch entstehen folgende nachteilige Effekte:
Das durch die Nachdosierung steigende Tankvolumen muss durch das Ablassen von Zinnbad im Gleichgewicht gehalten werden (abzulassendes Volumen = nachzudosierendes Volumen).

Der MSA Gehalt (freie Säure) steigt kontinuierlich an, wodurch sich der Arbeitspunkt des Elektrolyten kontinuierlich verschiebt. Das Verhalten der organischen Bad-Zusätze wird von dem sich ändernden Säuregehalt beeinflusst. Dies hat zur Folge, dass sich die Abscheideeigenschaften des Prozesses kontinuierlich verändern. Je nach Prozess und den abzuscheidenden Strukturen wird die Lebensdauer des Elektrolyten begrenzt. Typischerweise liegt diese Grenze bei einer MSA-Konzentration von ca. 250 g/l. Je nach Durchsatz tritt dies nach einigen Wochen ein und der gesamte Tank von ca. 150 I muss abgelassen und verworfen werden.

Diese beiden nachteiligen Effekte ließen sich vermeiden, wenn man Zinnmonoxid SnO Pulver zum Dosieren des reduzierten Zinns gemäß der folgenden Reaktionsgleichung verwenden könnte:
Anode: 6 H₂O → O₂ + 4 H₃O⁺ + 4 e⁻
Kathode: 2 Sn²⁺ + 4 CH₃SO₃⁻ + 4 e⁻ → 2 Sn + 4 CH₃SO₃⁻
Zinn-Dosierung:

   2 SnO + 4 CH₃SO₃⁻ + 4 H₃O⁺ → 2 Sn²⁺ + 4 CH₃SO₃⁻ + 6 H₂O

Entsprechendes gilt auch für die Zudosierung von Kupfer(II)-oxid CuO.

Bei diesem Verfahren würde sowohl das Ansteigen der freien Säure als auch das Ansteigen des Tankvolumens verhindert, womit sich zwei positive Effekte einstellen: es müsste kein Elektrolyt abgelassen werden, um ein Überfluten des Tanks zu vermeiden und der Gehalt an freier Säure bliebe konstant, wodurch sich die Lebensdauer des Elektrolyten signifikant verlängern würde.

Für solch eine Verfahrensführung wäre es jedoch ebenfalls erforderlich, Zinnoxid-Pulver bzw. Kupfer(II)-oxid-Pulver unter Reinraumbedingungen nachdosieren zu können.

Der vorliegenden Erfindung liegt somit die Aufgabe zugrunde, eine Vorrichtung bereitzustellen, die es erlaubt, Pulver in Reinräumen in flüssige Produktionsprozesse zu dosieren, ohne dass auch nur kleinste Mengen in die Produktionsräumlichkeiten austreten oder Personal damit in Kontakt kommen kann.

Diese Aufgabe wird durch die Merkmale des Anspruchs 1 und 15 gelöst.

Die erfindungsgemäße Vorrichtung zur Dosierung von Pulver, insbesondere in Reinräumen, umfasst einen Behälter mit Pulver und einen Verschlusskopf mit einem Septum für den Behälter, wobei der Verschlusskopf mit dem Behälter und das Septum mit dem Verschlusskopf pulverdicht verbindbar sind und eine Behälteraufnahme, die der Aufnahme des Verschlusskopfes des Behälters dient. Der Behälter weist mit seiner Öffnung nach unten, so dass das Pulver unter der Wirkung der Schwerkraft aus dem Behälter nach unten rieseln kann und keine zusätzlichen mechanischen Mittel für den Transport wie Schnecken o.Ä., die zu Abrieb führen können, erforderlich sind. Erfindungsgemäß ist ein Spalt zwischen dem Verschlusskopf und dem Aufnahmebecher der Behälteraufnahme vorgesehen, in dem eine Gasströmung zwischen dem Aufnahmebecher und dem Verschlusskopf erzeugbar ist.

Durch die Gasströmung lassen sich Pulverreste vom Septum und Verschlusskopf entfernen.

Wesentlich ist, dass die Abgabe des Pulvers und die Beseitigung von Pulverresten am Septum und am Verschlusskopf ausschließlich aufgrund von Schwerkraft und aufgrund von Gasströmung, insbesondere Luftströmungen, erfolgt und somit bewegbare mechanische Teile vermieden werden.

In einer bevorzugten Variante ist vorgesehen, dass sich der Querschnitt des Spalts zwischen Aufnahmebecher und Verschlusskopf in Richtung des Septums verkleinert, so dass die Strömungsgeschwindigkeit in Richtung des Septums zunimmt und durch den Düseneffekt Pulverreste vom Septum und dem Verschlusskopf wenigstens nahezu quantitativ entfernt werden.

Vorzugsweise ist der Spalt zwischen Aufnahmebecher und Verschlusskopf derart geformt, dass die Strömungsgeschwindigkeit am Septum maximal ist und/oder die Strömung gegen das Septum gelenkt wird, um Pulverpartikel vom Septum und dem Verschlusskopf vollständig zu entfernen. Besonders bevorzugt ist, dass die Strömungsgeschwindigkeit am Septum sowohl maximal ist und gegen das Septum gelenkt wird, d.h. dass der Winkel zwischen der Strömungsgeschwindigkeit und der Oberfläche des Septums vorzugsweise zwischen 0 und 45° ist.

Um eine pulverdichte Verbindung zwischen dem Septum und dem Septum-Adapter bereitzustellen, weist der Verschlusskopf einen Septum-Adapter und eine Septum-Kappe mit einer Öffnung auf, wobei die Septum-Kappe dazu dient, das Septum gegen den Septum-Adapter zu pressen. Im Bereich der Öffnung der Septum-Kappe ist das Septum zugänglich und kann in diesem Bereich dann von der Kanüle durchstochen werden.

Ein weiteres wesentliches Merkmal der erfindungsgemäßen Vorrichtung ist, dass diese gegen ein unbeabsichtigtes Abschrauben des Pulverbehälters oder Abschrauben des Verschlusskopfes gesichert ist, denn wären die Verbindungen zwischen dem Pulverbehälter und dem Verschlusskopf oder die Verbindungen innerhalb des Verschlusskopfes lösbar, so könnte Pulver nach außen dringen. Um unlösbare bzw. nicht mit normalen Kräften abschraubbare Verbindungen zu erhalten, sind an dem Verschlusskopf und dem Behälter komplementäre Rast- oder Schnappelemente und/oder an dem Septum-Adapter und der Septum-Kappe komplementäre Rast- oder Schnappelemente ausgebildet, die miteinander nach dem Aufschrauben oder Aufschieben des Verschlusskopfes auf den Behälter bzw. der Septum-Kappe auf den Septum-Adapter eine nicht mehr mit normalen Kräften abschraubbare und damit nicht lösbare Verbindung eingehen.

Die vollständige Entleerung des Pulvers aus dem Pulverbehälter wird vorzugsweise dadurch erreicht, dass der Behälter im Inneren im Bereich hin zum Behältergewinde und/oder der Septum-Adapter im Inneren als Trichter ausgestaltet sind und/oder die Vorrichtung wenigstens einen Rüttler am Behälter und/oder am Septum-Adapter aufweist.

Im Rahmen der vorliegenden Erfindung wird unter "Pulver" jeder rieselfähige Feststoff, unabhängig von dem jeweiligen Partikeldurchmesser, verstanden.

In der Behälteraufnahme ist die Kanüle zum Anstechen des Septums vorgesehen. Um das Pulver zu fluidisieren und damit eine Verstopfung der Kanüle zu verhindern, wird der Kanüle ein Gas zur Fluidisierung des herabrieselnden Pulvers zugeführt, wobei das Gas der Kanüle vorzugsweise über eine seitliche Leitung und über Öffnungen in der Kanülenwand zugeführt wird. Hierdurch wird gleichzeitig ein Druckausgleich erreicht. Die seitliche Zuführung des Gases ist von Vorteil, da der Querschnitt im Inneren der Kanüle nicht verringert wird. Alternativ kann das Gas auch über ein zusätzliches Rohr im Inneren der Kanüle zugeführt werden.

Im Allgemeinen wird die Luftströmung durch das Absaugen der Umgebungsluft über eine Absaugleitung erzeugt, wobei die Luft zwischen Verschlusskopf und Aufnahmebecher angesaugt und über eine Zentrumsbohrung im Aufnahmebecher an der Kanüle entlang zum Anschluss der Absaugleitung geführt wird. Ebenfalls möglich, aber weniger bevorzugt, ist es, Pressluft in den Spalt einzublasen.

In einer weiteren bevorzugten Variante wird der Aufnahmebecher der Behälteraufnahme mittels eines Federelements gegen einen Anschlag an einem Führungsrohr der Behälteraufnahme nach oben und so der Aufnahmebecher gegen den Verschlusskopf gedrückt, so dass ein definierter, reproduzierbarer Spalt für die Luftströmung bereitgestellt wird. Hierfür sollte der Aufnahmebecher auch derart ausgebildet sein, dass der Verschlusskopf zentriert in den Aufnahmebecher einführbar ist. Auch sollten an der Behälteraufnahme und/oder dem Verschlusskopf zur Bildung des Spalts Nocken und/oder Distanzhalter vorgesehen sein.

Vorzugsweise ist die erfindungsgemäße Vorrichtung weiterhin mit einem Abmesssystem ausgerüstet, das ebenfalls auf bewegbare mechanische Teile verzichtet und nur auf der durch die Schwerkraft bewirkten Füllung eines definierten Volumens beruht, derart, dass ein durch Ventile abtrennbares Volumen in einem Schlauch gefüllt und entleert werden kann.

Um ein Verklumpen des Pulvers zu meiden, ist der mit dem Abmesssystem verbundene Anschlusskopf vorzugsweise beheizbar.

In einer weiteren Variante ist der Anschlusskopf mit einem Mischbehälter verbunden, der einen Einlaufkanal aufweist, wobei die Prozessflüssigkeit vorzugsweise tangential in den Einlaufkanal eingeleitet wird und der Einlaufkanal vorzugsweise ein Überlaufwehr aufweist, um Pulverablagerungen an den Wänden des Mischbehälters zu verhindern.

Dadurch, dass durch die sich zeitlich ändernde Strömung des Gases während der Fluidisierung die Schüttdichte des in das Abmesssystem rieselnden Pulvers im Wesentlichen konstant gehalten wird, ist es überhaupt möglich, die Abmessung des Pulvers in Reinräumen über das Volumen und somit ohne bewegbare Teile, Waagen etc. zu erreichen.

In einer bevorzugten Variante beträgt das Gasvolumen der Fluidisierung zwischen dem 0,3- und dem 3,0-Fachen, vorzugsweise zwischen dem 0,5- und dem 2,0-Fachen des abtrennbaren Volumens in dem Anschlussschlauch. Ebenso ist es für eine konstante Schüttdichte vorteilhaft, wenn die Strömung des Gases am Ende der Fluidisierung am größten ist.

Die erfindungsgemäße Vorrichtung wird insbesondere zur Dosierung von Pulvern in Reinräumen oder zur Dosierung von gesundheitsschädlichen Pulvern, insbesondere zur Dosierung von Borsäure, Zinn(II)-oxid oder Cu(ll)-oxid, verwendet.

Die vorliegende Erfindung betrifft auch die Verwendung der Vorrichtung zur Herstellung von chemischen Produkten, insbesondere Wafern oder Leiterplatten, unter Reinraumbedingungen, insbesondere durch Beschichtung, Galvanisieren, Beizen, Entfettung, Ätzen, Fällungen oder chemische Reaktionen, wobei die Zudosierung der Pulver mit der erfindungsgemäßen Vorrichtung erfolgt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 den schematischen Aufbau der erfindungsgemäßen Pulverdosiervorrichtung, die an einen Mischbehälter angeschlossen ist,
Figur 2 eine Seitenansicht des Behälters der Pulverdosiervorrichtung mit Verschlusskopf und Rüttler,
Figur 3a einen Schnitt durch den Behälter mit Verschlusskopf aus Figur 2,
Figur 3b - 3e einen Schnitt durch den Behälter mit Verschlusskopf aus Figur 2 mit Details des Verschlusskopfs im Schnitt,
Figur 4 Explosionszeichnung des Behälters mit Verschlusskopf aus Figur 3a,
Figur 5a einen Schnitt durch den Verschlusskopf und die Behälteraufnahme,
Figur 5b die Luftströmung im Spalt,
Figur 5c und die Form des Spalts im Bereich des Septums,
Figur 6 die Draufsicht auf den Aufnahmebereich von oben mit den Nocken und den Distanzhaltern,
Figur 7 den Behälter mit dem Verschlusskopf, a) vor Betätigung des Kniehebelmechanismus, b) nach der Betätigung des Kniehebelmechanismus,
Figur 8: die Behälteraufnahme mit der Kanüle und dem Verschlusskopf im Schnitt entsprechend Figur 5, jedoch mit angestochenem Septum,

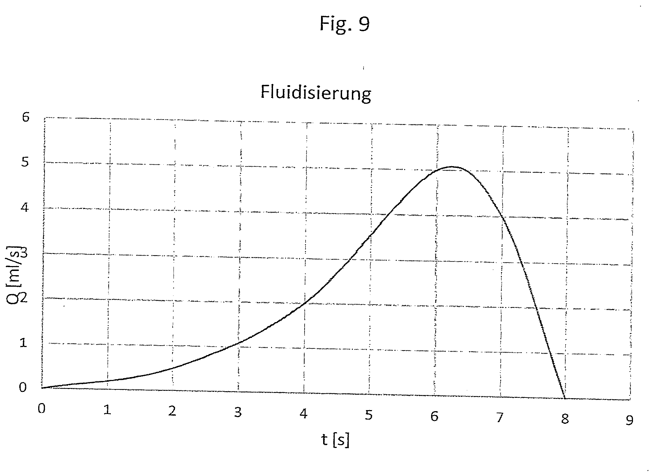

Figur 9 Beispiel eines Luftströmungs-Zeit-Diagramms einer Fluidisierung,
Figur 10 einen Schnitt durch das Abmesssystem,
Figur 11 eine Seitenansicht auf den Mischbehälter und den Mischbehälter entlang der Linie A-A im Schnitt,
Figur 12 den oberen Bereich des Mischbehälters im Schnitt A-A aus Figur 11,
Figur 13 Anschluss des Mischbehälters (von oben),
Figur 14 einen Mischbehälter mit zwei Pulverdosiervorrichtungen,
Figur 15 den schematischen Aufbau einer Anlage für einen galvanischen Abscheideprozess mit flüssiger Nachdosierung gemäß dem Stand der Technik und
Figur 16 den schematischen Aufbau einer Anlage für einen galvanischen Abscheideprozess mit einer erfindungsgemäßen Pulverdosiervorrichtung.

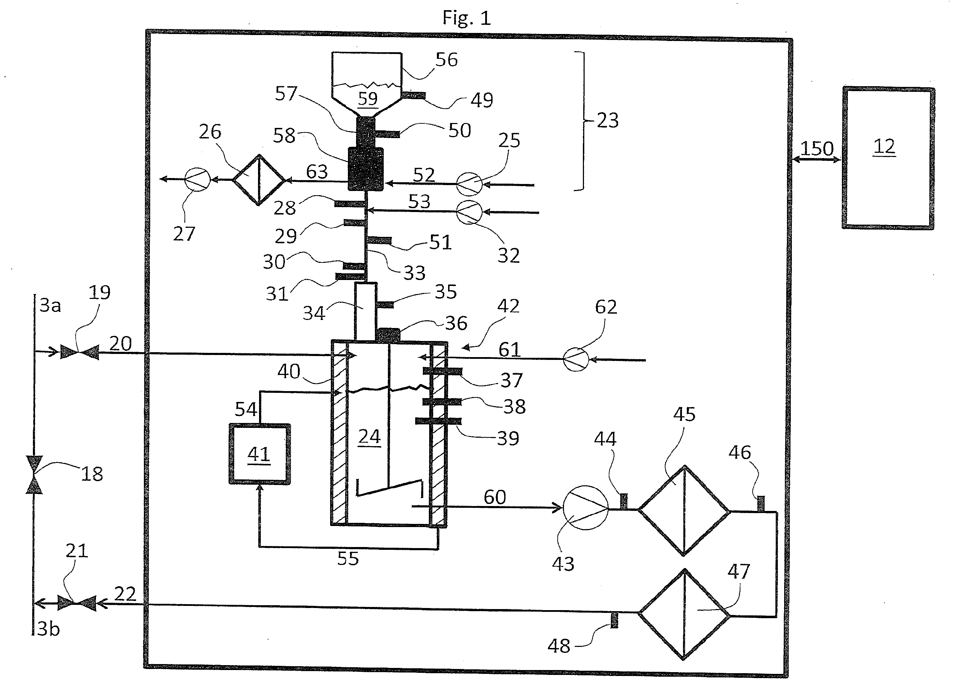

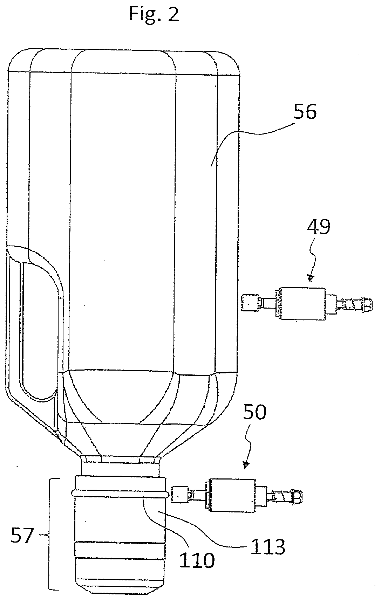

In Figur 1 ist schematisch der Aufbau der erfindungsgemäßen Pulverdosiervorrichtung 23 dargestellt, die über einen Abmessschlauch 33 an einen Mischbehälter 42 angeschlossen ist. Das Pulver 59 befindet sich in einem Behälter 56, dessen Öffnung 56a nach unten gerichtet ist. Der Behälter 56 weist einen speziellen Verschlusskopf 57 auf und ist in die Behälteraufnahme 58 gesteckt, vgl. auch Figur 2 bis 5. Die Behälteraufnahme 58 ermöglicht das staubfreie Herausrieseln des Pulvers 59 in den Abmessschlauch 33, von da in den Anschlusskopf 34 und von da in den Mischbehälter 42, wo sich das Pulver 59 in der Prozessflüssigkeit auflöst.

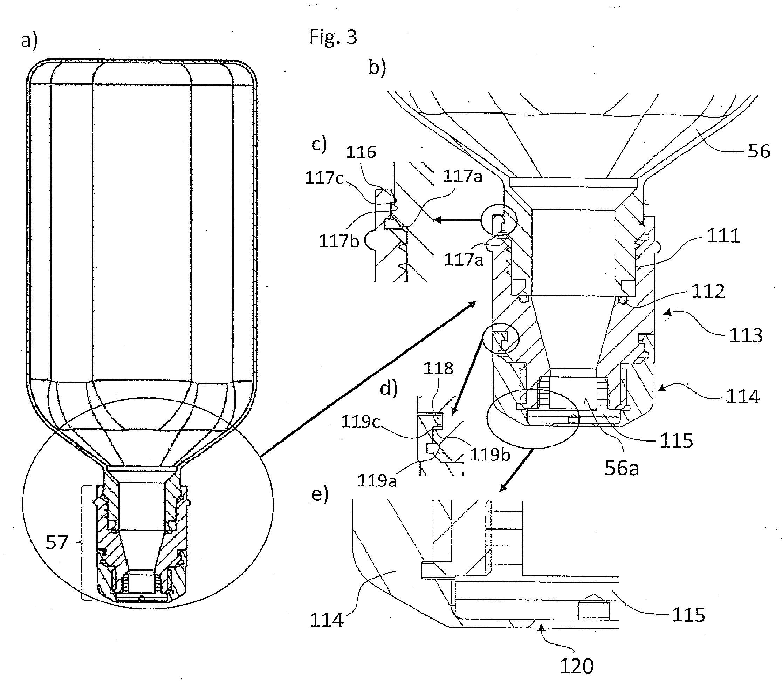

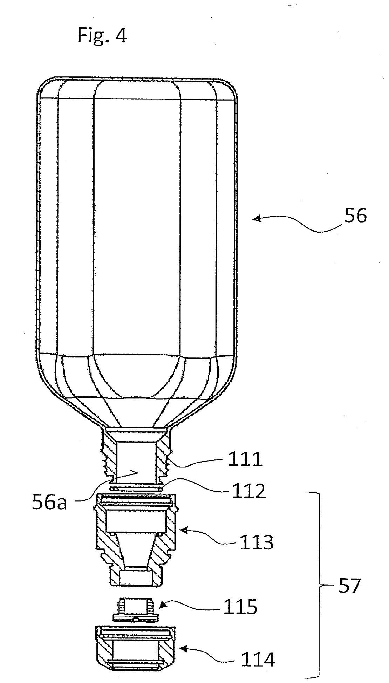

Der Aufbau des Verschlusskopfs 57 ist in Figur 2 bis Figur 4 dargestellt. Der Verschlusskopf 57 wird - wie in Figur 2 und Figur 3 dargestellt - auf das Behältergewinde 111 des Behälters 56 anstelle eines normalen Drehverschlusses aufgeschraubt. Dadurch lassen sich handelsübliche Behälter 56 verwenden. Der Verschlusskopf 57 besteht - wie in der Explosionszeichnung Figur 4 dargestellt - aus folgenden Teilen: einem Dichtungselement 112, nämlich einem O-Ring, einem Septum-Adapter 113, einem Septum 115 und einer Septum-Kappe 114.

Der O-Ring 112 dichtet zwischen Behältergewinde 111 oder unterem Ende des Behälters 56 und dem Septum-Adapter 113. Dadurch wird verhindert, dass Pulver 59 an der Verbindungstelle austreten kann. Der O-Ring 112 ist so gewählt, dass er eine sichere Dichtung zwischen dem Behältergewinde 111 und dem Septum-Adapter 113 mit allen Toleranzen, die sich im zusammengeschraubten Zustand aus den Einzelteilen ergeben, bewirkt.

Wichtig ist, dass sich der Septum-Adapter 113 nicht vom Behältergewinde 111 unbeabsichtigt lösen kann, da ansonsten unkontrolliert Pulver 59 austreten würde. Um dies zu verhindern, sind am Septum-Adapter 113 Rast- oder Schnappelemente 116 vorgesehen, die bei vollständigem Aufschrauben des Septum-Adapters 113 in komplementäre, am Behälter 56 oberhalb des Behältergewindes 111 vorgesehenen Rast- oder Schnappelementen 117 einrasten/-schnappen.

Oberhalb des Behältergewindes 111 erstreckt sich die Außenwand des Behälters 56 radial leicht schräg nach außen und bildet eine Gleitfläche 117a, so dass der Septum-Adapter 113 leicht an dieser schrägen Außenwand 117a des Behälters 56 entlang nach oben geschraubt bzw. geschoben werden kann, wobei er an seiner nach oben weisenden Seite leicht nach außen gedrückt wird. Oberhalb der Schräge 117a erstreckt sich die Außenwand 117b des Behälters 56 radial nach innen und bildet eine senkrecht zur Längsachse des Behälters 56 verlaufende Sperrfläche 117b, hinter der ein Aufnahmeraum 117c für die ebenfalls radial nach innen verlaufende Rastnase 116 am Septum-Adapter 113 gebildet wird, die beim Nachobenschieben/-schrauben in dem Aufnahmeraum 117c einrastet. Dadurch, dass die Rastnase 116 des Septum-Adapters 113 an der radial nach innen weisende Fläche 117b des Behälters anliegt, kann der Septum-Adapter 113 nicht mehr abgeschraubt oder nach unten geschoben werden, so dass die Rast-/Schnappverbindung 116 durch Schrauben nicht lösbar ist, vgl. Figur 3b, c.

Durch die Ausgestaltung der Gleitfläche 117a ist es mit geringer Kraft möglich, den Septum-Adapter 113 aufzuschrauben, aber nahezu unmöglich, diesen wieder zu entfernen, nachdem der Rasthaken 116 des Septum-Adapters 113 über das komplementäre Rastelement 117b, c geschnappt ist.

Ebenso muss sichergestellt werden, dass kein Pulver 59 zwischen Septum-Adapter 113 und Septum 115 austreten kann. Beim Aufschrauben der Septum-Kappe 114 auf den Septum-Adapter 113 wird das Septum 115 durch die Septum-Kappe 114 in den Septum-Adapter 113 hineingedrückt und verhindert das Austreten von Pulver 59.

Auch hier ist es erforderlich, zu verhindern, dass sich die Septum-Kappe 114 unbeabsichtigt von dem Septum-Adapter 113 lösen kann. Dies wird analog zu der zuvor beschriebenen Rast- bzw. Schnappverbindung 116, 117b, 117c, zwischen dem Septum-Adapter 113 und dem Behälter 56 gelöst, derart, dass der Septum-Adapter 113 ebenfalls eine leicht radial nach außen gerichtete Gleitfläche 119a aufweist (vgl. Figur 3b, d), so dass die Oberseite der Septum-Kappe 114 beim Einschrauben und Nachobenschieben leicht nach außen gedrückt wird und dann nach Überfahren der radial nach innen, rechtwinklig der Längsachse verlaufenden Fläche 119b mit dem Rasthaken 118 in dem Freiraum 119c federnd einrastet. Nachdem die Sperrfläche 119b rechtwinklig gegenüber der Längsachse des Septum-Adapters 113 verläuft, kann die Rastverbindung durch eine Aufschraubbewegung oder ein Nachuntenziehen nicht mehr gelöst werden.

Der Behälter 56, der Septum-Adapter 113 und die Septum-Kappe 114 können aus verschiedenen Metallen, beschichteten Metallen, Kunststoffen oder Glas gefertigt werden. Es ist nicht zwingend notwendig, dass alle Teile aus dem gleichen Material gefertigt werden. Bevorzug werden chemisch beständige Kunststoffe eingesetzt. Damit ist sichergestellt, dass auch kleinste Mengen von diesen Kunstoffen die Prozessflüssigkeit nicht nachteilig beeinflussen können.

Sobald der Behälter 56 vollständig von dem Pulver 59 entleert ist, kann er zusammen mit dem Verschlusskopf 57 aus der Behälteraufnahme 58 entfernt und gegen einen vollen Behälter 56' mit Verschlusskopf 57 ausgetauscht werden.

Der Verschlusskopf 57 kann entweder entsorgt oder aber in einem speziellen Verfahren recycelt werden.

Das Septum 115 wird aus einem Elastomer gefertigt. Es können je nach Anwendung verschiedene Elastomere zum Einsatz kommen wie Naturkautschuk, synthetischer Kautschuk, Ethylen-Propylen-Rubber EPM, Fluoroelastomere FKM und FEPM, Perfluorelastomer Kalrez®, Ethylenvinylacetat EVA, Butylkautschuke und andere. Butylkautschuke sind infolge ihrer chemischen und physikalischen Eigenschaften als Material für das Septum besonders bevorzugt, da sie sehr beständig gegen Säuren und Laugen und elastisch sind und eine Shore-A Härte von 40 bis 85 und eine Bruchdehnung von 700 % aufweisen. Die gute Chemikalienbeständigkeit ist wichtig, denn für den unwahrscheinlichen Fall, dass dennoch minimalste Partikel in die Prozessflüssigkeit gelangen sollten, würde diese nicht nachteilig beeinflusst. Die gute Elastizität und die gute Bruchdehnung ermöglichen ein sicheres Anstechen des Septums 115 in der Behälteraufnahme 58, ohne dass Pulver 59 bei diesem Vorgang austritt, und ebenso ein sicheres Verschließen des Septums 115 nach dem Entfernen des Behälters 56 aus der Behälteraufnahme 58 und dem damit verbundenen Abziehen der Kanüle 134. Es ist wichtig, dass sich das Septum 115 nach der Entnahme des Behälters 56 aus der Behälteraufnahme 58 selbständig wieder verschließt und somit den Austritt von Pulver 59 aus dem Behälter 56 verhindert.

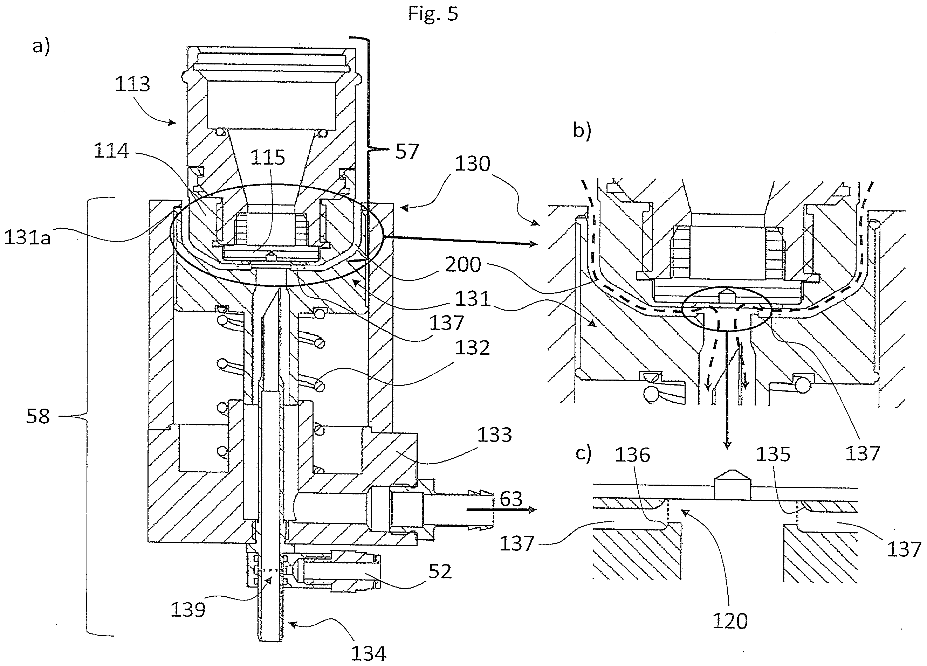

Die Form des Septums 115 kann eine Scheibe oder, wie in dem in Figur 3 und 4 dargestelltem Schnitt als Stopfen ausgebildet sein. Bevorzugt wird die Form eines Stopfens, da diese Form eine sichere Dichtung zwischen dem Septum-Adapter 113 und dem Septum 115 während des Anstechens und Abziehens ergibt. Die große Dichtfläche der Stopfenform gewährleistet eine sichere Dichtung auch beim Auftreten von großen Kräften auf das Septum 115, wie dies beim Anstechen oder Abziehen geschieht. Die Anpresskräfte, die von der Septum-Kappe 114 im Bereich des Septums 115 benötigt werden, können durch die Stopfenform des Septums 115 klein gehalten werden und gewährleisten trotzdem eine sichere Dichtung. Dies führt dazu, dass die benötigten Wandstärken dünn gehalten werden können. Somit ist es möglich, einen strömungsgünstigen Übergang von der Septum-Kappe 114 auf das Septum 115, wie in Figur 3e und 5 im Übergangsbereich 120 dargestellt, auszuformen.

Der Behälter 56 hat im Inneren im Bereich hin zum Behältergewinde 111 die Form eines Trichters. Und auch der Septum-Adapter 113 ist im Inneren zum Septum 115 hin als Trichter ausgestaltet. Diese Formgebung ermöglicht es, das gesamte Pulver 59 aus dem Behälter 56 zu entleeren. Je nach Pulvertyp und Behälter 56 kann es notwendig sein, zu rütteln, so dass das Pulver 59 sicher nach unten in Richtung Septum 115 fällt und der Behälter 56 vollständig geleert werden kann.

Um eine vollständige Entleerung des Pulvers 59 aus dem Behälter 56 zu erreichen, können ein oder mehr Rüttler 49 am Behälter 56 und/oder ein oder mehr Rüttler 50 am Septum-Adapter 113 vorgesehen sein (Figur 1, 2). Der Ort und die Anzahl der Rüttler 49, 50 ist stark von der Art des Pulvers 59 und der Form des Behälters 56 abhängig.

Als sehr wirkungsvoll hat sich der Rüttler 50 am Septum-Adapter 113 erwiesen. Diese Anordnung rüttelt genügend, um den Behälter 56 vollständig zu entleeren, ohne das Pulver 59 so stark zu verdichten, dass es zu einer Verstopfung kommt. Um den Effekt des Rüttelns auch nach häufigem Wechsel des Behälters 56 reproduzierbar zu gestalten, weist der Septum-Adapter 113 an seiner Außenwand eine Wulst 110 auf (Figur 2), die sicherstellt, dass die Vibrationen unabhängig von der exakten Positionierung des Rüttlers 50 immer an der gleichen Stelle in den Septum-Adapter 113 eingeleitet werden. Als Rüttler können beispielsweise elektromechanische, piezoelektrische, pneumatische Rüttler oder Exzenterrüttler zum Einsatz kommen.

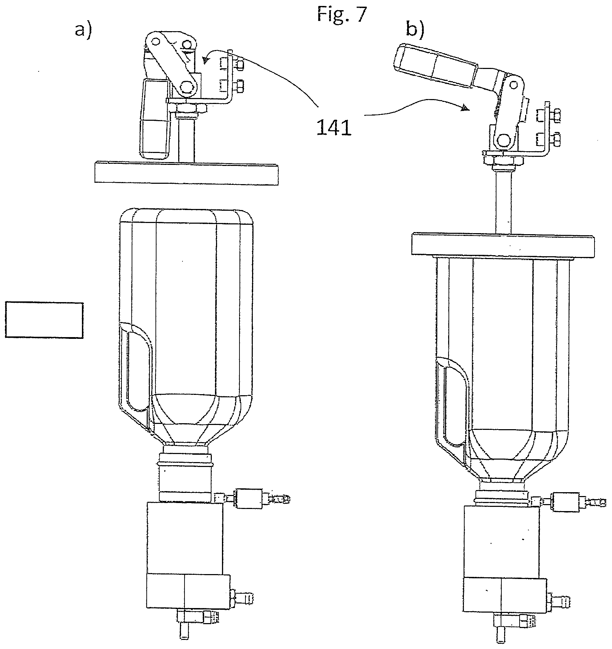

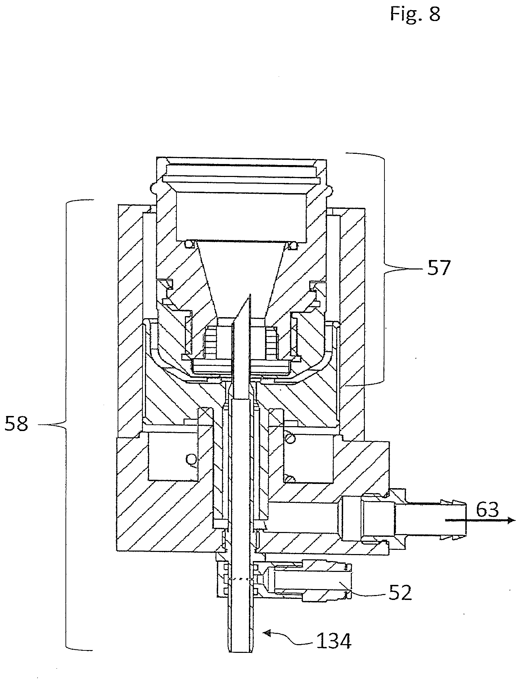

Der Behälter 56 mit Verschlusskopf 57 und Septum-Adapter 113 wird in die Behälteraufnahme 58 eingesetzt. Um den Abmessschlauch 33 mit dem Pulver 59 zu füllen, wird die Kanüle 134 in der Behälteraufnahme 58 in das Septum 115 eingestochen, und das Pulver 59 rieselt in der Kanüle 134 nach unten (vgl. Figur 5, Figur 8). Über eine Leitung 52, die sich rechtwinklig zu der Längsrichtung der Kanüle 134 erstreckt, wird mithilfe der Fluidisierungspumpe 25 Gas in das in der Kanüle 134 herabrieselnde Pulver gedrückt, um dieses zu fluidisieren. Hierzu wird das Gas durch die in Figur 7 dargestellten Löcher 139 in der Außenwand der Kanüle 134 geleitet. Dadurch wird die Rieselfähigkeit des Pulvers 59 sichergestellt und das Volumen des in den Abmessschlauch 33 rieselnden Pulvers durch Gas ersetzt. Somit entsteht kein Unterdruck in dem Behälter 56, und es muss kein Gas gegen die Fließrichtung des Pulvers 59 strömen. Das sichert ein reproduzierbares Füllen des Abmessschlauchs 33. Mittels einer Pumpe kann sowohl die Menge als auch die Geschwindigkeit, mit der das Gas in das Pulver 59 gedrückt wird, sehr genau eingestellt werden.

Um eine hohe Reproduzierbarkeit der zu dosierenden Pulvermenge zu erreichen, ist es erforderlich, dass die Schüttdichte des Pulvers, das in das Abmesssystem gelangt, möglichst konstant ist.

Einerseits hat das Pulver im Bereich der Kanüle je nach Füllstand des Behälters eine unterschiedliche Schüttdichte.

Andererseits können nicht reproduzierbare Schüttdichten im Abmesssytem auch von einem Unterdruck im Behälter herrühren, da dann Gas entgegen der Strömungsrichtung des Pulvers aus dem Abmesssystem in den Behälter gesogen wird. Insofern ist es erforderlich, das dem Behälter entnommene Volumen des Pulvers durch Gas zu ersetzen, um nicht reproduzierbare Schüttdichten im Abmesssystem zu vermeiden.

Erfindungsgemäß wird das Pulver vor dem Transfer in das Abmesssystem über die Fluidisierungspumpe 25, mit der Gas in das herabrieselnde Pulver gedrückt wird, fluidisiert, und zwar derart, dass sich die Strömung des Gases während der Fluidisierung zeitlich ändert. Hierdurch kann die Schüttdichte im Abmesssystem im Wesentlichen konstant gehalten werden. Das Fluidisieren wird vor dem Öffnen des Quetschventiles 28 durchgeführt.

Es ist auch wichtig, dass die Fluidisierung nur in einem beschränkten Bereich der Kanüle geschieht, so dass das Gas sehr lokal gespeichert wird, bevor das Pulver in das Abmesssystem überführt wird.

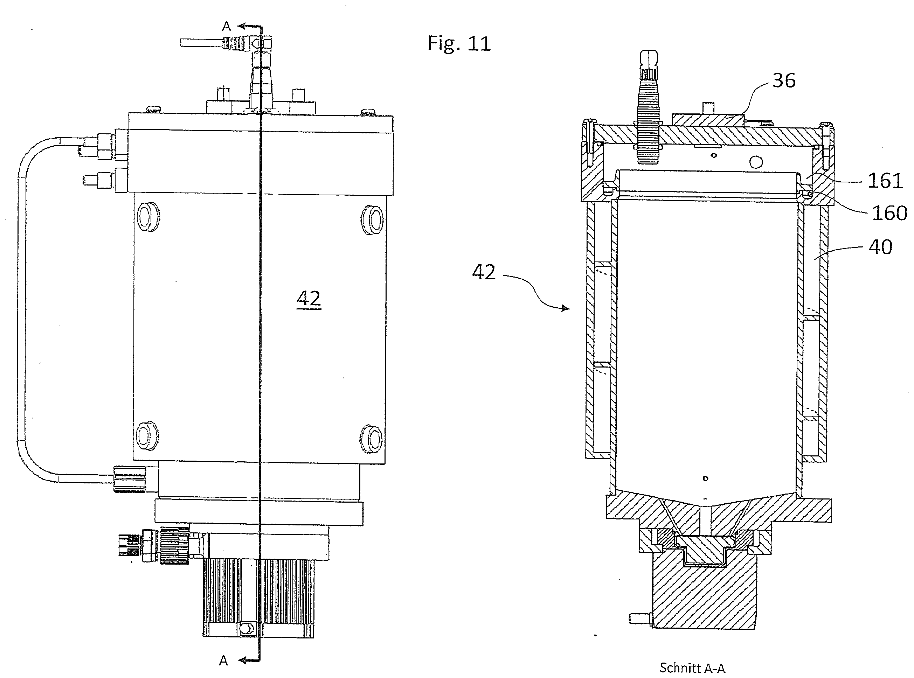

In einer ersten Variante wird die Pumpe 25 so gesteuert, dass vor einer Dosierung immer das gleiche Luftstrom-Zeit-Profil zur Fluidisierung genutzt wird, wie in Fig. 11 dargestellt.

Eine weitere Verbesserung der Reproduzierbarkeit der Schüttdichten kann in einer weiteren Variante dadurch erreicht werden, dass das Luftstrom-Zeit-Profil dem jeweiligen Füllstand des Behälters angepasst wird.

Das gesamte Gasvolumen für die Fluidisierung entspricht etwa dem 0,3-bis 3,0-Fachen und vorzugsweise dem 0,5- bis 2,0-Fachen des Volumens des Abmesssystems (I^{∗}di^{2∗}π/4).

Der zeitliche Verlauf der Gasströmung bestimmt im Wesentlichen den Ausbreitungsgrad des Gaspolsters im Pulver im Bereich der Kanüle. Es ist wichtig, dass das Gas nicht nur in der Kanüle gespeichert wird, sondern auch aus der Kanüle in den Behälter austritt. Es ist sogar wichtig, dass der größte Teil des Gases in den unteren Bereich des Behälters gelangt. Daher wird die größte Gasmenge am Ende der Fluidisierung in das Pulver gedrückt.

In Figur 11 ist der zeitliche Verlauf der Gasströmung während einer Fluidisierung mittels einer Pumpe dargestellt. Vorzugsweise steigt die Strömung des Gases zunächst langsam an und erreicht vor dem Ende der Fluidisierung maximale Strömungsgeschwindigkeit. Je nach den Eigenschaften des Pulvers ist es notwendig, eine für ein Pulver typische Fluidisierung einzustellen.

Alternativ kann auch ein zeitgesteuertes Ventil anstelle der Pumpe eingesetzt werden. Je nach den Eigenschaften des zu dosierenden Pulvers 59 können verschiedene Gase verwendet werden, wobei trockene und ölfreie Luft, Stickstoff und Argon als die gebräuchlichsten zu nennen sind. Stickstoff und Argon werden gerne verwendet, wenn das Pulver zum Beispiel oxidieren kann oder hygroskopisch ist.

Über die Absaugleitung 63, die sich oberhalb der Fluidisierungsleitung 52 erstreckt, wird die Behälteraufnahme 58 permanent oder zeitweise, je nach Anwendung, abgesaugt. Der Staubfilter 26 (Figur 1) verhindert, dass Partikel in die Abluftpumpe 27 gelangen können. Diese Anordnung, die schematisch in Figur 1 dargestellt ist, kann auch durch ein zentrales Abluftsystem ersetzt werden. Dann wird die Absaugleitung 63 direkt an das zentrale Abluftsystem angeschlossen. Ebenfalls kann der Ausgang des Staubfilters 26 an ein Abluftsystem angeschlossen werden, womit verhindert wird, dass Partikel in das Abluftsystem gelangen, da diese vom Staubfilter 26 zurückgehalten werden.

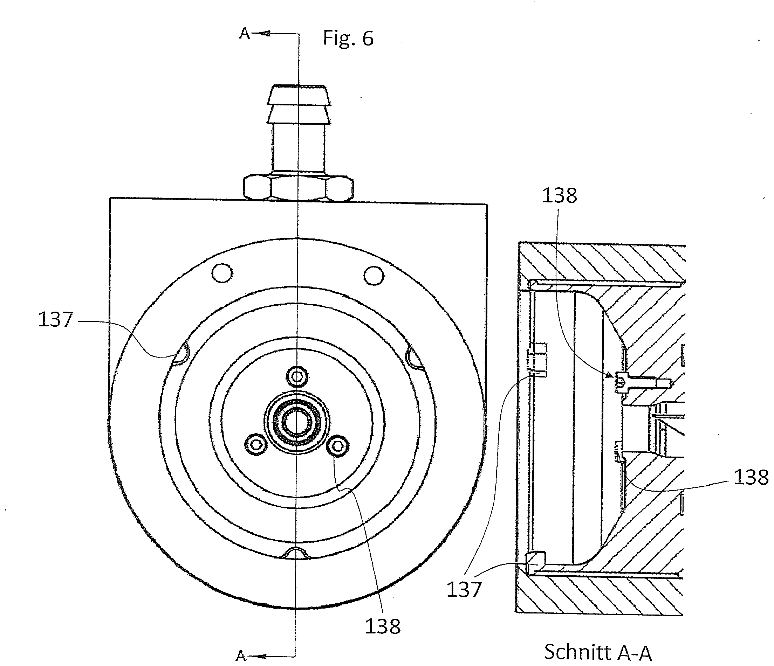

In Figur 5 ist der Längsschnitt durch die Behälteraufnahme 58 mit aufgesetztem, nicht angestochenem Verschlusskopfs 57 dargestellt. Der Verschlusskopf 57 wird in den Aufnahmebecher 131 der Behälteraufnahme 58 eingesetzt. Der Aufnahmebecher 131 ist so ausgebildet, dass der Verschlusskopf 57 zentriert in den Aufnahmebecher 131 eingeführt wird. Dies wird durch die drei Nocken 137 am Aufnahmebecher 131, vgl. Figur 6, erreicht. Es können auch mehr als drei Nocken 137 vorgesehen sein. Ebenfalls sind Distanzhalter 138 vorgesehen, die - zusammen mit den Nocken 137 -, einen definierten Luftspalt 200 zwischen Verschlusskopf 57 und Aufnahmebecher 131 bereitstellen. Es können auch mehre Distanzhalter 138 vorhanden sein. Diese können auch verstellbar sein, so dass der Luftspalt 200 im Bereich des Septums 115 auf die benötigte Strömungsgeschwindigkeit eingestellt werden kann. Es werden Strömungsgeschwindigkeiten von 2 - 35 m/s benötigt, je nach den Eigenschaften des Pulvers 59 und den für die Herstellung von Aufnahmebecher 131, Septum-Kappe 114 und dem Septum 115 verwendeten Materialien und deren Oberflächenbeschaffenheit.

In Figur 5b ist die Luftströmung in dem Spalt 200 gestrichelt eingezeichnet. Die Luftströmung wird durch das Absaugen der Umgebungsluft über die Absaugleitung 63 erzeugt. Die Luft wird zwischen Aufnahmebecher 131 und Verschlusskopf 57 angesaugt und über die Zentrumsbohrung im Aufnahmebecher 131 an der Kanüle 134 entlang zum Anschluss der Absaugleitung 63 im Aufnahmeunterteil 133 geführt.

Durch den sich kontinuierlich verkleinernden Querschnitt zwischen Aufnahmebecher 131 und Verschlusskopf 57 erhöht sich die Strömungsgeschwindigkeit kontinuierlich und ist im Bereich des Septums 115 am größten. Die Septum-Kappe 114, die das Septum 115 in seinem Randbereich teilweise von unten untergreift, besitzt in Richtung des Zentrums des Septums 115 einen abgerundeten Rand 135, wie in Figur 5b dargestellt, der strömungsgünstig ausgelegt ist. Der Zentrumsbereich des Septums 115 liegt nicht auf der Septum-Kappe 114 auf, sondern ist zugänglich. Der Aufnahmebecher 131 weist an seiner nach oben weisenden, dem Zentrumsbereich 120 des Septums 115 gegenüberliegenden Seite eine der Unterseite des abgerundeten Rands 135 der Septum-Kappe 114 entsprechende Rundung 136 auf, so dass die Luftströmung nach oben in Richtung des Septums 115 gelenkt wird, wie in Figur 7b dargestellt. Hierdurch wird die bestmögliche Anströmung des Septums 115 gewährleistet. Diese Anströmung des Septums 115 stellt sicher, dass beim Durchstechen des Septums 115 mit der Kanüle 134 oder beim Herausziehen der Kanüle 134 herausfallende Partikel gezielt abgesaugt werden. Damit ist sichergestellt, dass keine Partikel am Septum 115 oder am Verschlusskopf 57 hängen bleiben. Somit kann der Behälter 56 aus der Behälteraufnahme 58 entfernt werden, ohne dass die Gefahr besteht, dass Partikel in die Umgebung entweichen können. Je nach Material, aus dem die Einzelteile gefertigt werden und den Eigenschaften des Pulvers 59, kann es notwendig sein, die angesaugte Luft zu ionisieren. Damit wird verhindert, dass Partikel infolge statischer Aufladung nicht abgesaugt werden können.

Eine Druckfeder 132 drückt den Aufnahmebecher 131 bis zu einem Anschlag 131a im Führungsrohr 130 der Behälteraufnahme 58 nach oben. Die Feder 132 ist so vorgespannt, dass das Septum 115 durch das Eigengewicht des Behälters 56 nicht von der Kanüle 134 angestochen werden kann. Damit wird verhindert, dass ein unkontrolliertes Durchstechen des Septums 115 durch die Kanüle 134 geschieht. Ein kontrolliertes Durchstechen des Septums 115 mit einer möglichst gleichmäßigen Bewegung ist notwendig, um das Austreten von Pulver 59 beim Durchstechen des Septums 115 zu verhindern. Im einfachsten Fall kann ein Kniehebel 141 zu Anwendung kommen, wie in Figur 7a und Figur 7b dargestellt, um den Behälter 56 nach unten zu drücken, um das Septum 115 mit der Kanüle 134 zu durchstechen, vgl. Figur 5, Figur 8. Wird der Kniehebel 141 wieder gelöst, wird der Behälter 56 mittels der Feder 132 gegen den Kniehebel 141 gedrückt, so dass ein kontrolliertes Abziehen des Behälters 56 mit dem Verschlusskopf 57 mit dem Septum 115 von der Kanüle 134 gewährleistet ist. Anstelle eines manuellen Kniehebels 141 können auch automatisierbare Antriebe mit oder ohne Kniehebel 141 wie pneumatische-, hydraulische- oder elektrische Systeme verwendet werden.

Die Kanüle 134 durchdringt das Septum 115 so weit, dass die angeschliffene Spitze der Kanüle 134 im Inneren des Behälters 56 zum Liegen kommt, so dass das Pulver in die Kanüle rieseln kann.

Um das Austreten von Pulver 59 beim Durchstechen und Herausziehen der Kanüle 134 vom Septum 115 zu verhindern, ist die Form der Spitze und der Schliff der Kanüle 134 entscheidend. Es hat sich gezeigt, dass das Verhältnis von Dicke des Septums 115 zu Kanülenaußendurchmesser im Bereich von 0,4 bis 1,0 ideal ist. Es können verschiedene Schliffe an der Kanüle 134 verwendet werden. Die bekanntesten sind Lanzettenschliff, Facettenschliff und weitere, die aus der Medizin bekannt sind. Wichtig ist, dass beim Durchstechen kein Loch in das Septum 115 gestanzt wird, sondern das ganze Septum 115 nur durchstochen wird und nicht Teile des Septums 115 in die Kanüle 134 oder ins Pulver 59 gelangen.

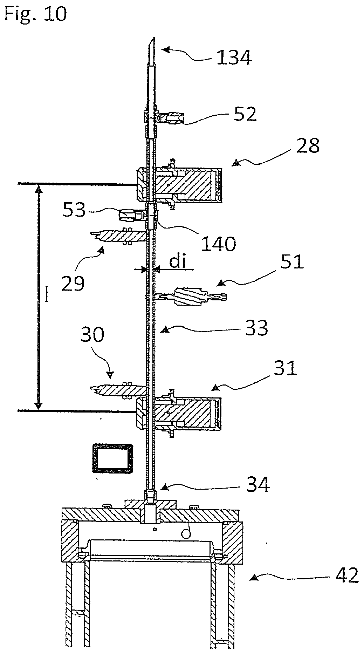

Mit der erfindungsgemäßen Pulverdosiervorrichtung kann nun bei Bedarf eine bestimmte Menge Pulver 59 wie folgt dosiert werden. Ist das Septum 115 mit der Kanüle 134 durchstochen, so rieselt das Pulver 59 durch die Kanüle 134 in den Abmessschlauch 33. In Figur 10 ist das Abmesssystem im Schnitt dargestellt und in Figur 11 schematisch. Ist das Quetschventil 28 geschlossen, so füllt sich der Abmessschlauch 33 bis zum Quetschventil 28. Ist das Quetschventil 28 offen und das Quetschventil 31 geschlossen, füllt sich der Abmessschlauch 33 vom Behälter 56 bis zum Quetschventil 31. Wird das Quetschventil 28 geschlossen und das Quetschventil 31 geöffnet, rieselt das Pulver zwischen den Quetschventilen 28 und 31 durch den Anschlusskopf 34 in den Mischbehälter 42. Das Volumen des dosierten Pulvers 59 berechnet sich aus dem Abstand I und dem Innendurchmesser di des Abmessschlauchs 33, wie in Figur 10 dargestellt. Durch die Variation des Abstandes der zwei Quetschventile 28 und 31 kann die Menge des zu dosierenden Pulvers 59 eingestellt werden. Während des Entleerens des Abmessschlauches 33 kann mittels der Pumpe 32 Gas über den Schlauch 53 in die Ausblasdüse 140 gepumpt werden. Dies dient dazu, das Pulver 59 kontrolliert aus dem Abmessschlauch 33 herauszudrücken. Die Ausblasdüse 140 ist unmittelbar nach dem oberen Quetschventil 28 angebracht. Es können trockene Luft, Stickstoff, Argon oder andere geeignete Gase verwendet werden. Anstelle der Ausblasdüse 140 kann auch ein Rüttler 51 am Abmessschlauch 33 angebracht werden, um das vollständige Herausrieseln des Pulvers 59 zu garantieren. Es können auch Ausblasdüse 140 und Rüttler 51 gemeinsam verwendet werden. Anstelle der Pumpe 32 kann auch ein zeitgesteuertes Ventil mit oder ohne Drossel eingesetzt werden.

Der Abmessschlauch 33 sollte aus einem elastischen Material mit gutem Rückstellverhalten sein. Geeignete Schlauchmaterialen sind Silikon, Neopren, Marprene, Fluorelastomer, PFL-verstärkte Fluorelastomere und weitere. Der Abmessschlauch 33 kann auch in starren Rohren aufgebaut und nur im Bereich der Quetschventile 28 und 31 mit einem elastischen Schlauch ausgeführt sein. Da die Toleranzen des Innendurchmessers von elastischen Schläuchen in der Regel größer sind als von Rohren, ist das Dosiervolumen von Station zu Station bei Rohren reproduzierbarer. Mit dem beschriebenen Aufbau aus einem Abmessschlauch 33 (mit oder ohne Rohre) kann eine Wiederholgenauigkeit des zudosierten Volumens von <1% erreicht werden.

Der Anschlusskopf 34 wird auf einer höheren Temperatur gehalten als die Umgebungstemperatur. Damit wird verhindert, dass es durch Feuchtigkeit am Auslass des Anschlusskopfes 34 zu Verstopfungen kommen kann. Der Anschlusskopf 34 kann mittels einer Heizpatrone und einem Temperatursensor, in Figur 1 als Heizung 35 dargestellt, auf einer definierten Temperatur gehalten werden. Die Temperierung des Anschlusskopfes 34 kann mittels anderen Medien, beispielsweise mit heißen Fluiden oder Gasen, geschehen.

Mit dem Temperatursensor 39 kann das Prozessmanagementsystem 12 die Temperatur des Anschlusskopfes 34 so einstellen, dass es nicht zu Kondensierungen am Anschlusskopf 34 kommen kann. Über die Pumpe 62 kann der Gasraum oberhalb der Prozessflüssigkeit 24 über die Verbindung 61 gezielt mit Gas gespült werden. Übliche Gase sind trockene Luft, Stickstoff und Argon. Durch das Einleiten von Gas kann die Feuchtigkeit im Raum reduziert werden und dadurch das Verstopfen des Auslasses am Anschlusskopf 34 verhindert werden. Auch kann durch Verwendung entsprechender Gase die Oxidation des Pulvers 59 und der Prozessflüssigkeit 24 reduziert oder verhindert werden. Anstelle der Pumpe 62 kann auch ein zeitgesteuertes Ventil mit oder ohne Drossel eingesetzt werden.

Mit dem Pulversensor 29 kann festgestellt werden, ob der Abmessschlauch 33 zwischen den Quetschventilen 28 und 31 vollständig gefüllt ist. Mit dem Pulversensor 30 kann auch festgestellt werden, ob sich der Abmessschlauch 33 nach dem Öffnen des Quetschventils 31 geleert hat. Für die Pulversensoren 29 und 30 geeignete Messprinzipien sind zum Beispiel kapazitive, Ultraschall- oder Infrarotmessung

Verlässt das Pulver 59 den Anschlusskopf 34, so fällt es in den Mischbehälter bzw. Lösebehälter 42, wo sich das Pulver 59 mit der Prozessflüssigkeit 24 vermischt oder auflöst. Der Füllstand im Mischbehälter 42 der Prozessflüssigkeit 24 wird so geregelt, dass dieser zwischen den Füllstandsensoren 37 und 38 gehalten wird. Dem Prozessmanagementsystem 12 stehen dafür die Ventile 19, 18, 21 und Pumpe 43 zur Verfügung. Das Prozessmanagementsystem 12 regelt den Füllstand so, das er permanent zwischen den Füllstandsensoren 37 und 38 hin- und herschwankt. Damit werden Ablagerungen durch Pulver 59 an den Wänden des Mischbehälters 42 verhindert. Anstelle oder zusätzlich zu den Füllstandsensoren 37 und 38 kann eine kontinuierliche Füllstandsmessung verwendet werden, um eine bessere Füllstandsregelung zu gewährleisten. Um ein gutes Vermischen und/oder Lösen des Pulvers 59 mit der Prozessflüssigkeit 24 zu gewährleisten, ist ein Rührwerk 36 in dem Mischbehälter 42 integriert. Dieses wird von dem Prozessmanagementsystem 12 gesteuert. Es können mechanische Rührwerke, magnetische Rührer oder hydraulischen Mischer beispielsweise der Tank Mixer PTM-200 von Levitronix, verwendet werden. In Figur 11 ist ein Querschnitt durch den Mischbehälter 42 mit einem hydraulischen Mischer dargestellt.

Prozessflüssigkeiten 24 haben oft eine erhöhte Temperatur bis zu 90 °C. Um sicherzustellen, dass die Prozessflüssigkeit 24 im Mischbehälter 42 nicht abkühlt, kann der Mischbehälter 42 doppelwandig ausgeführt werden. Findet beim Auflösen des Pulvers 59 eine exotherme Reaktion statt, ist es notwendig, die entstehende Energie abzuführen. Dies kann mittels eines Temperiersystems 41 erfolgen. Die Kühl- oder Heizflüssigkeit wird vom Temperiersystem 41 über die Leitung 54 in den Zwischenraum 40 gepumpt und über die Leitung 55 wieder zurück in das Temperiersystem 41. Die Materialien für den Mischbehälter 42 müssen entsprechend der Anwendung ausgewählt werden. Besonders fluoridierte Kunststoffe kommen zum Einsatz, da diese temperaturbeständig sind und sehr gute Chemikalienbeständigkeit aufweisen.

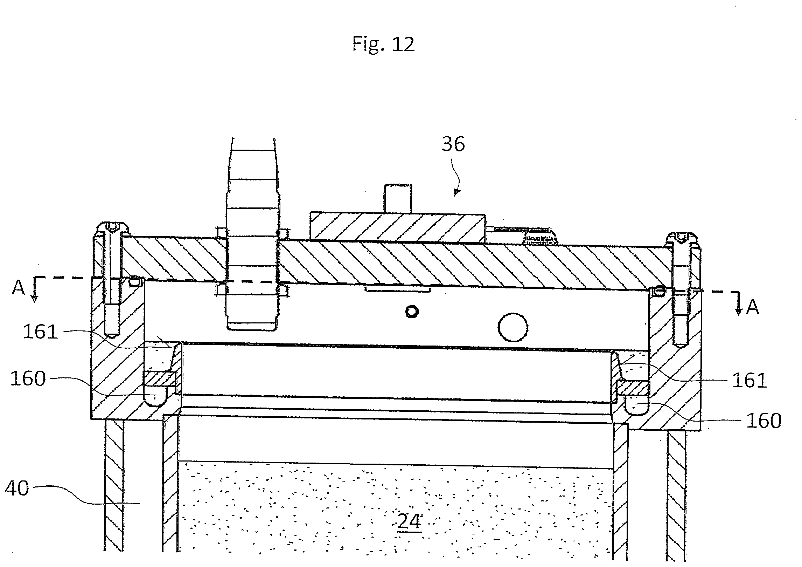

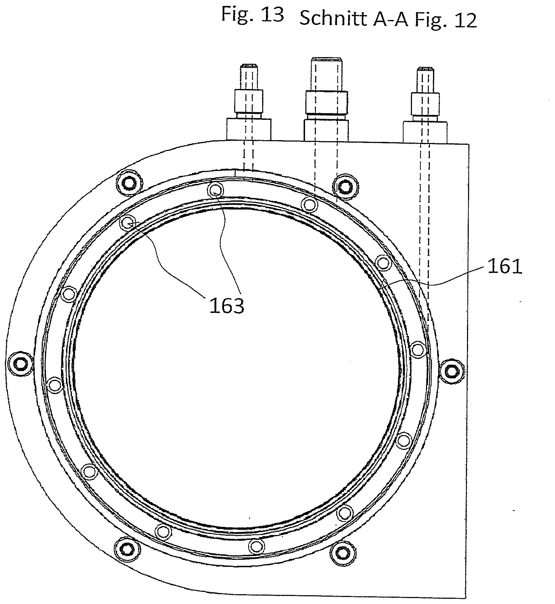

Beim Austreten des Pulvers 59 aus dem Anschlusskopfes 34 kann sich das Pulver an den Wänden des Mischbehälters 42 ablagern. Um sicher zu verhindern, dass sich das Pulver an den Wänden des Mischbehälters 42 oberhalb des maximal Standes der Prozessflüssigkeit 24 ablagert, ist der Einlauf in den Mischbehälter 42 mit einem Überlaufwehr 161 ausgestattet. Über die Leitung 20 wird die Prozessflüssigkeit 24 in den Einlaufkanal 160 geleitet (in Figur 12 dargestellt). Die Leitung 20 (Figur 1) wird an den Anschluss 162 angeschlossen, der die Prozessflüssigkeit 24 tangential in den Einlaufkanal 160 leitet, in Figur 13 dargestellt. Durch diese tangentiale Einleitung wird eine fast gleichmässige Druckverteilung im Einlaufkanal 160 erreicht. Somit strömt die Prozessflüssigkeit 24 gleichmässig durch die Bohrungen 163 zum Überlaufwehr 161. Vom Überlaufwehr 161 fließt die Prozessflüssigkeit 24 der Wand entlang am Mischbehälter 42 nach unten und wäscht permanent eventuelle Pulverrückstände in die Prozessflüssigkeit 24 und verhindert so ein Aufkumulieren von Pulver 59 an den Seitenwänden.

Je nach Bedarf kann das Prozessmanagementsystem 12 die Prozessflüssigkeit 24 permanent durch den Mischbehälter 42 leiten, und dabei ist das Ventil 18 geschlossen und die Ventile 19 und 21 offen. Oder es werden vor dem Pulverdosieren Ventile 19 und 21 geschlossen und Ventil 18 geöffnet, dann wird die gewünschte Menge Pulver 59 in den Mischbehälter 42 gegeben und während einer bestimmten Zeit das Pulver 59 vermischt oder gelöst. Danach wird Ventil 18 geschlossen und die Ventile 19 und 21 geöffnet und die Pumpe 43 saugt über Leitung 60 Prozessflüssigkeit aus dem Mischbehälter 42 und hält die Zirkulation aufrecht. Wird ein hydraulischer Mischer verwendet, können Pumpe 43 und Mischer ineinander integriert sein.

Je nach Prozess kann es notwendig sein, die Prozessflüssigkeit 24 nach dem Lösen des Pulvers 59 von ungewollten Partikeln zu reinigen. Das kann mittels eines oder mehrerer Filter 45 und 47 geschehen. Es kann auch notwendig sein, dass eines der Filter 45, 47 als Aktivkohlefilter ausgeführt ist, um ungewollte Verbindungen auszufiltern. Die Drucksensoren 44, 46 und 48 sind zur Überwachung der Filter 45, 47 und können ein Zusetzen detektieren. Es können auch Zentrifugen zum Einsatz kommen.

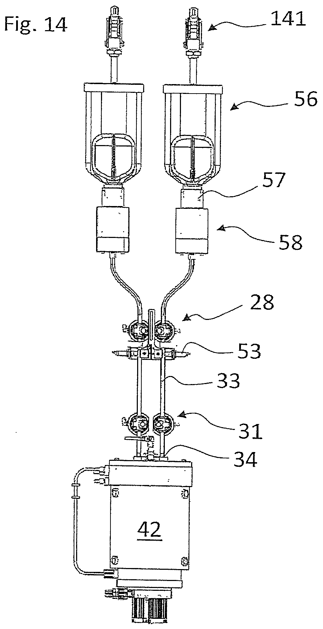

Für einen Mischbehälter 42 können zwei Pulverdosiervorrichtungen 23 vorgesehen sein, die einen gemeinsamen Anschlusskopf 34 benutzen, wie in Figur 14 dargestellt. Dadurch muss der Dosierprozess nicht unterbrochen werden, wenn ein Behälter 56 leer wird. Das Prozessmanagementsystem 12 schaltet dann automatisch vom leeren auf den vollen Behälter 56 um. Nun hat das Bedienpersonal Zeit, den leeren Behälter 56 durch einen vollen zu ersetzen, ohne den Dosierprozess zu unterbrechen.

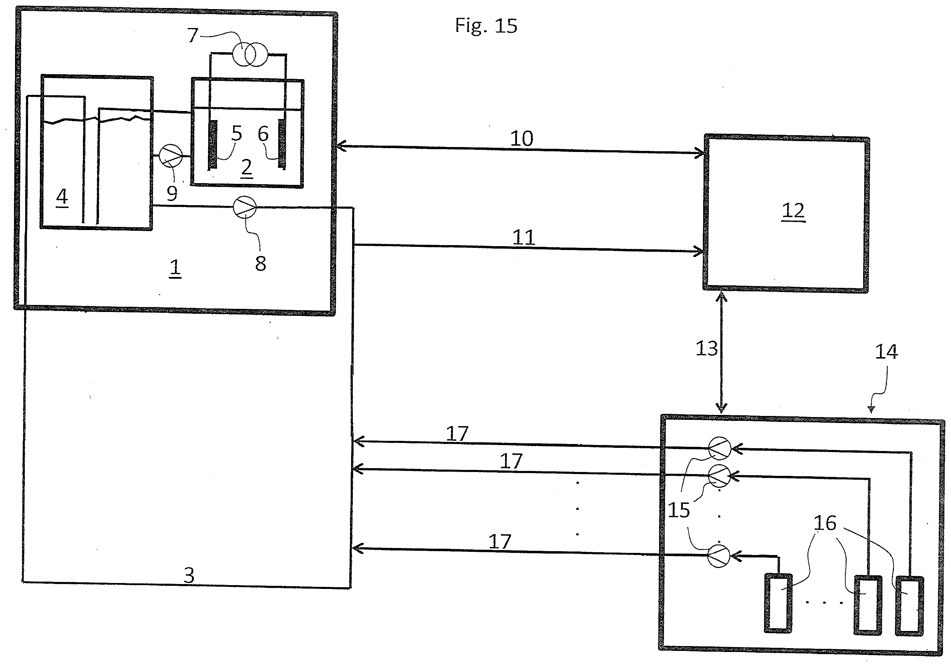

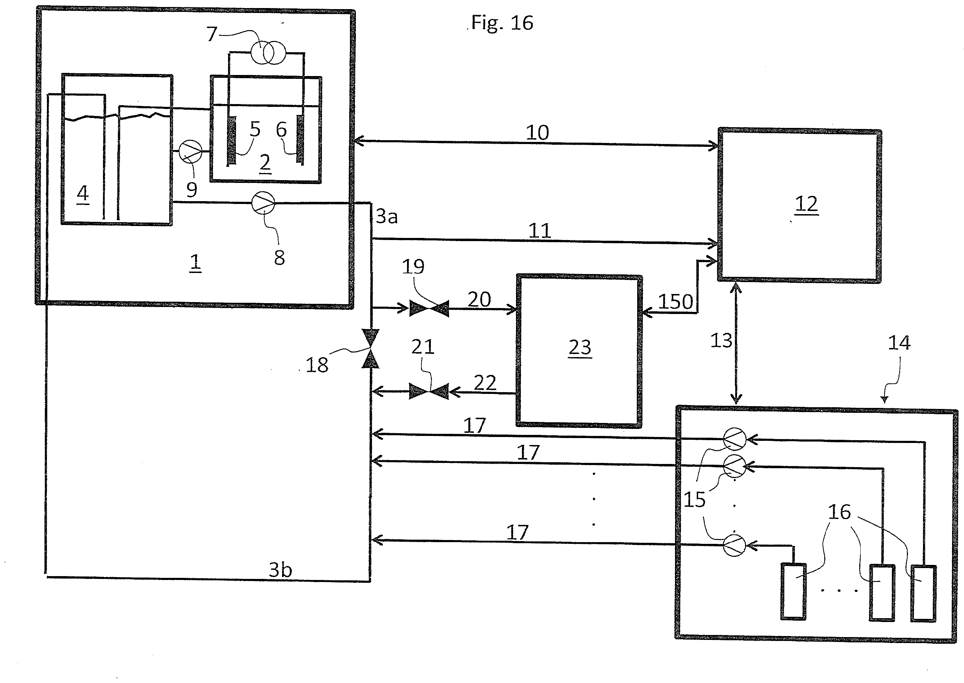

In Figur 15 ist schematisch der Stand der Technik am Beispiel eines galvanischen Abscheideprozess mit flüssiger Nachdosierung dargestellt und in Figur 16 ein Beispiel für die aus dem Stand der Technik bekannte Anlage, in die die erfindungsgemäße Pulverdosiervorrichtung 23 integriert ist.

Die Werkstücke werden in der Produktionsmaschine 1 mit einer Metallschicht überzogen, Figur 15 und 16. Die Kathode 5 ist mit dem Werkstück in der Abscheidekammer 2 elektrisch verbunden. Die Anode 6 kann aus einem inerteren Material wie beispielsweise Titan, Platin oder Edelstahl oder aus dem abzuscheidenden Material wie z.B. Kupfer oder Nickel sein. Die auf das Werkstück abgeschiedene Stoffmenge wird durch die Ladungsmenge Q, die sich über die Stromstärke I und die Zeit t berechnet, von der Stromquell 7 bestimmt. Die Abscheidekammer 2 wird mittels der Prozesspumpe 9 aus Tank 4 angeströmt, um eine konstante Doppelschicht an der Kathode 5 zu gewährleisten. Aus dem Tank 4 wird mit der Zirkulationspumpe 8 die Prozessflüssigkeit 24 im Tank 4 umgewälzt.

Nach der Prozesspumpe 9 und der Zirkulationspumpe 8 können Partikelfilter eingebaut sein (nicht dargestellt). Aus der Zirkulationsleitung 3 wird dem Prozessmanagementsystem 12 nach der Zirkulationspumpe 8 über die Probeleitung 11 eine kleine Menge der Prozessflüssigkeit 24 zugeführt. Das Prozessmanagementsystem 12 bestimmt die Konzentration der einzelnen Komponenten, aus der sich die Prozessflüssigkeit 24 zusammensetzt. Über die Kommunikationsleitung 10 tauschen die Produktionsmaschine 1 und das Prozessmanagementsystem 12 Daten aus. Diese Daten werden unter anderem benötigt, um die Dosiermengen von einzelnen Nachdosierkonzentrationen 16 durch das Prozessmanagementsystem 12 zu berechnen. Die Nachdosiereinheit 14 wird vom Prozessmanagementsystem 12 über die Kommunikationsleitung 13 gesteuert. Das Prozessmanagementsystem 12 errechnet anhand der Analysedaten und der Daten der Produktionsmaschine 1 laufend die benötigten Dosiervolumina der einzelnen Nachdosierkonzentrationen 16 und überwacht den Dosierprozess. Die einzelnen Pumpen 15 pumpen die Konzentrate über die Nachdosierleitungen 17 in die Zirkulationsleitung 3. Die Anschlüsse der Nachdosierleitungen 17 müssen nach dem Abgang der Probeleitung 11 an der Zirkulationsleitung 3 angebracht sein, damit verhindert wird, dass überkonzentrierte Prozessflüssigkeit 24 in das Prozessmanagementsystem 12 gelangt, falsche Analyseergebnisse erzeugt und falsche Nachdosiermengen berechnet werden.

In Figur 16 ist die Anlage aus Figur 15 dargestellt, an die die erfindungsgemäße Pulverdosiervorrichtung 23 nebst den dazugehörigen Leitungen und Ventilen angeschlossen ist. Die Pulverdosiervorrichtung 23 wird gesteuert und überwacht vom Prozessmanagementsystem 12. Über die Datenleitung 150 werden die dazu notwendigen Daten zwischen den Systemen ausgetauscht, ähnlich wie bei der in Figur 15 beschriebenen Nachdosiereinheit 14. Die Zirkulationsleitung 3 wird durch das Bypass-Ventil 18 in die Zirkulationsleitung 3a und Zirkulationsleitung 3b geteilt. Über das Zulaufventil 19 und die Zuleitung 20 wird der Pulverdosiervorrichtung 23 die Prozessflüssigkeit 24 zugeführt, in der das Pulver 59 gelöst wird. Über die Rückleitung 22 und das Rücklaufventil 21 wird die Prozessflüssigkeit 24 mit dem gelösten Pulver 59 in die Zirkulationsleitung 3b eingespeist. Findet keine Pulverdosierung statt, ist das Bypass-Ventil 18 geschlossen und die Zirkulation wird permanent durch die Pulverdosiervorrichtung 23 durchgeleitet. Dadurch ist sichergestellt, dass es keine stagnierenden Prozessflüssigkeiten 24 im ganzen System gibt. Bei längeren Auflösezeiten des Pulvers 59 kann es notwendig sein, während der Auflösezeit das Bypass-Ventil 18 zu öffnen und das Zulaufventil 19 wie das Rücklaufventil 21 zu schließen. So wird sichergestellt, dass die anderen Funktionalitäten wie in Fig. 15 beschrieben uneingeschränkt weiter funktionieren. Nach Ablauf der Auflösezeit wird das Bypass-Ventil 18 geschlossen und das Zulaufventil 19 wie das Rücklaufventil 21 geöffnet. Das Rücklaufventil 21 kann bei entsprechendem Aufbau der Pulverdosiervorrichtung 23 auch durch ein Rückschlagventil ersetzt werden.

## Patentansprüche

1. Vorrichtung zur Dosierung von Pulver (59), die einen Behälter (56) mit Pulver (59) und einen Verschlusskopf (57) mit einem Septum (115) für den Behälter (56) aufweist, wobei der Verschlusskopf (57) mit dem Behälter (56) und das Septum (115) mit dem Verschlusskopf (57) pulverdicht verbindbar ist, und die Vorrichtung weiterhin eine Behälteraufnahme (58) aufweist, die der Aufnahme des Verschlusskopfes (57) des Behälters (56) dient, und der Behälter (56) mit seiner Öffnung (56a) nach unten weist, so dass das Pulver (59) aus dem Behälter (56) rieseln kann, wobei ein Spalt (200) zwischen dem Verschlusskopf (57) und einem Aufnahmebecher (131) der Behälteraufnahme (58) vorhanden ist, in dem eine Gasströmung zwischen dem Aufnahmebecher (131) und dem Verschlusskopf (57) erzeugbar ist und die Behälteraufnahme (58)eine Kanüle (134) zum Anstechen des Septums (115) aufweist.

2. Vorrichtung nach Anspruch 1, **dadurch gekennzeichnet, dass** sich der Querschnitt des Spalts (200) zwischen Aufnahmebecher (131) und Verschlusskopf (57) in Richtung des Septums (115) verkleinert, so dass die Strömungsgeschwindigkeit des Gases in Richtung des Septums (115) zunimmt.

3. Vorrichtung nach einem der Ansprüche 1 oder 2, **dadurch gekennzeichnet, dass** der Spalt (200) zwischen Aufnahmebecher (131) und Verschlusskopf (57) derart geformt ist, dass die Strömungsgeschwindigkeit am Septum (115) maximal ist und die Strömung gegen das Septum (115) gelenkt wird, um Pulverpartikel vom Septum (115) und dem Verschlusskopf (57) zu entfernen.

4. Vorrichtung nach einem der vorangegangenen Ansprüche, **dadurch gekennzeichnet, dass** der Verschlusskopf (57) einen Septum-Adapter (113) und eine Septum-Kappe (114) mit einer Öffnung (114a) aufweist, wobei die Septum-Kappe (114) dazu dient, das Septum (115) gegen den Septum-Adapter (113) zu pressen.

5. Vorrichtung nach einem der vorangegangenen Ansprüche, **dadurch gekennzeichnet, dass** an dem Verschlusskopf (57) und dem Behälter (56) komplementäre Rast- oder Schnappelemente (116, 117b, c) und/oder an dem Septum-Adapter (113) und der Septum-Kappe (114) komplementäre Rast- oder Schnappelemente (118, 119 b, c) ausgebildet sind, die miteinander nach dem Aufschrauben oder Aufschieben des Verschlusskopfes (57) auf den Behälter (56) bzw. der Septum-Kappe (114) auf den Septum-Adapter (113) eine nicht oder schwer lösbare Verbindung eingehen.

6. Vorrichtung nach einem der vorangegangenen Ansprüche, **dadurch gekennzeichnet, dass** der Behälter (56) im Inneren im Bereich hin zu einem Behältergewinde (111) und/oder der Septum-Adapter (113) im Inneren als Trichter ausgestaltet sind und/oder die Vorrichtung wenigstens einen Rüttler (49, 50) am Behälter (56) und/oder am Septum-Adapter (113) aufweist.

7. Vorrichtung nach einem der vorangegangenen Ansprüche, **dadurch gekennzeichnet, dass** der Kanüle (134) ein Gas zur Fluidisierung des herabrieselnden Pulvers (59) zugeführt wird, wobei das Gas der Kanüle (134) vorzugsweise über eine seitliche Leitung (52) und über Öffnungen (139) in der Kanülenwand zugeführt wird.

8. Vorrichtung nach einem der vorangegangenen Ansprüche, **dadurch gekennzeichnet, dass** die Luftströmung durch das Absaugen der Umgebungsluft über eine Absaugleitung (63) erzeugt wird, die Luft zwischen Verschlusskopf (57) und Aufnahmebecher (131) angesaugt und über eine Zentrumsbohrung im Aufnahmebecher (131) an der Kanüle (134) entlang zum Anschluss der Absaugleitung (63) geführt wird.

9. Vorrichtung nach einem der vorangegangenen Ansprüche, **dadurch gekennzeichnet, dass** der Aufnahmebecher (131) der Behälteraufnahme (58) mittels eines Federelements (132) gegen einen Anschlag (131a) an einem Führungsrohr (130) der Behälteraufnahme (58) nach oben gedrückt wird und/oder der Aufnahmebecher (131) derart ausgebildet ist, dass der Verschlusskopf (57) zentriert in den Aufnahmebecher (131) einführbar ist, und/oder an der Behälteraufnahme (58) und/oder dem Verschlusskopf (57) zur Bildung des Spalts (200) Nocken (137) und/oder Distanzhalter (138) vorgesehen sind.

10. Vorrichtung nach einem der vorangegangenen Ansprüche, **dadurch gekennzeichnet, dass** die Vorrichtung weiterhin ein Abmesssystem aufweist, das auf der Füllung eines durch Ventile (28, 31) abtrennbaren Volumens in einem Anschlussschlauch (33) beruht.

11. Vorrichtung nach Anspruch 10, **dadurch gekennzeichnet, dass** an das Abmesssystem ein Anschlusskopf (34) angeschlossen ist, der beheizbar ist.

12. Vorrichtung nach Anspruch 11, **dadurch gekennzeichnet, dass** der Anschlusskopf (34) mit einem Mischbehälter (42) verbunden ist, der einen Einlaufkanal (160) aufweist, wobei die Prozessflüssigkeit (24) vorzugsweise tangential in den Einlaufkanal (160) eingeleitet wird und der Einlaufkanal (160) vorzugsweise ein Überlaufwehr (161) aufweist, um Pulverablagerungen an den Wänden des Mischbehälters (42) zu verhindern.

13. Vorrichtung nach Anspruch 10, **dadurch gekennzeichnet, dass**, die Schüttdichte des Pulvers (59) in dem Anschlussschlauch (33) durch eine sich während der Fluidisierung zeitlich ändernde Strömung des Gases im Wesentlichen konstant gehalten wird.

14. Vorrichtung nach Anspruch 13, **dadurch gekennzeichnet, dass** das Gasvolumen der Fluidisierung zwischen dem 0,3- und dem 3,0-Fachen, vorzugsweise zwischen dem 0,5- und dem 2,0-Fachen des abtrennbaren Volumens in dem Anschlussschlauch (33) beträgt und/oder die Strömung des Gases am Ende der Fluidisierung am größten ist.

15. Verwendung einer Vorrichtung nach einem der vorangegangenen Ansprüche zur Dosierung von Pulvern (59) in Reinräumen oder zur Dosierung von gesundheitsschädlichen Pulvern (59).

16. Verwendung nach Anspruch 15 zur Dosierung von Borsäure, Zinn(II)-oxid oder Kupfer(II)-oxid.

17. Verwendung nach Anspruch 15 zur Herstellung von chemischen Produkten.

18. Verwendung nach Anspruch 17 zur Herstellung von Wafern, Leiterplatten, Substraten oder Multi-Chip-Modulen.

19. Verwendung nach Anspruch 17 oder 18, **dadurch gekennzeichnet, dass** die Herstellung unter Reinraumbedingungen durch Beschichtung, Galvanisieren, Beizen, Entfettung, Ätzen, Fällungen oder chemische Reaktionen erfolgt.

## Claims

1. Device for metering powder (59), which comprises a vessel (56) containing powder (59) and a sealing head (57) with a septum (115) for the vessel (56), wherein the sealing head (57) is connectable powdertight with the vessel (56) and the septum (115) with the sealing head (57), and the device further comprises a vessel holder (58), which serves to hold the sealing head (57) of the vessel (56), and the vessel (56) with its opening (56a) points downwards, so that the powder (59) can flow out of the vessel (56), wherein a gap (200) is present between the sealing head (57) and a holding bowl (131) of the vessel holder (58), in which a gas flow between the holding bowl (131) and the sealing head (57) can be created and the vessel holder (58) has a cannula (134) for piercing the septum (115).

2. Device according to Claim 1, **characterized in that** the cross-section of the gap (200) between holding bowl (131) and sealing head (57) decreases in the direction of the septum (115), so that the flow rate of the gas increases in the direction of the septum (115) .

3. Device according to one of Claims 1 or 2, **characterized in that** the gap (200) between holding bowl (131) and sealing head (57) is shaped such that the flow rate is maximal on the septum (115) and the flow is guided against the septum (115) in order to remove powder particles from the septum (115) and the sealing head (57).

4. Device according to one of the preceding claims, **characterized in that** the sealing head (57) has a septum adapter (113) and a septum cap (114) with an opening (114a), wherein the septum cap (114) serves to press the septum (115) against the septum adapter (113) .

5. Device according to one of the preceding claims, **characterized in that** complementary locking or snap-on elements (116, 117b, c) on the sealing head (57) and the vessel (56) and/or complementary locking or snap-on elements (118, 119b, c) on the septum adapter (113) and the septum cap (114) are formed, which enter into a non-detachable or difficult to detach connection with one another after respectively the sealing head (57) is screwed or pushed onto the vessel (56) and the septum cap (114) onto the septum adapter (113).

6. Device according to one of the preceding claims, **characterized in that** the vessel (56) inside in the region towards a vessel thread (111) and/or the septum adapter (113) inside is shaped as a funnel and/or the device contains at least one vibrator (49, 50) on the vessel (56) and/or on the septum adapter (113).

7. Device according to one of the preceding claims, **characterized in that** a gas for fluidizing the downward-flowing powder (59) is fed into the cannula (134), wherein the gas is preferably fed into the cannula (134) via a side pipe (52) and via openings (139) in the cannula wall.

8. Device according to one of the preceding claims, **characterized in that** the air flow is created by suction of the ambient air via a suction pipe (63), the air is sucked in between sealing head (57) and holding bowl (131) and is passed via a central hole in the holding bowl (131) along the cannula (134) to the connector of the suction pipe (63).

9. Device according to one of the preceding claims, **characterized in that** the holding bowl (131) of the vessel holder (58) is pressed upwards against a catch (131a) on a guide pipe (130) of the vessel holder (58) by means of a spring element (132) and/or the holding bowl (131) is formed such that the sealing head (57) can be introduced centred into the holding bowl (131) and/or notches (137) and/or spacers (138) are provided on the vessel holder (58) and/or the sealing head (57) to form the gap (200).

10. Device according to one of the preceding claims, **characterized in that** the device further has a metering system which is based on the filling of a volume in a connecting hose (33) separable by valves (28, 31).

11. Device according to Claim 10, **characterized in that** an attachment head (34) which is heatable is attached to the metering system.

12. Device according to Claim 11, **characterized in that** the attachment head (34) is connected to a mixing vessel (42) which has an inlet channel (160) wherein the process liquid (24) is introduced preferably tangentially into the inlet channel (160) and the inlet channel (160) preferably has an overflow weir (161) in order to prevent powder deposits on the walls of the mixing vessel (42).

13. Device according to Claim 10, **characterized in that** the bulk density of the powder (59) in the connecting hose (33) is kept essentially constant by a gas flow varying with time during the fluidization.

14. Device according to Claim 13, **characterized in that** the gas volume of the fluidization amounts to between 0.3 and 3.0 times, preferably between 0.5 and 2.0 times the separable volume in the connecting hose (33) and/or the gas flow is greatest at the end of the fluidization.

15. Use of a device according to one of the preceding claims for metering powders (59) in clean-rooms or for metering powders (59) harmful to health.

16. Use according to Claim 15 for metering boric acid, tin(II) oxide or copper(II) oxide.

17. Use according to Claim 15 for producing chemical products.

18. Use according to Claim 17 for producing wafers, circuit boards, substrates or multi-chip modules.

19. Use according to Claim 17 or 18, **characterized in that** the production under clean-room conditions is effected by coating, electroplating, pickling, degreasing, etching, precipitations or chemical reactions.

## Revendications

1. Dispositif destiné à doser de la poudre (59), lequel présente un récipient (56) contenant de la poudre (59) et une tête d'obturation (57) pourvue d'une cloison (115) et destinée audit récipient (56), dans lequel la tête d'obturation (57) peut être reliée au récipient (56) et la cloison (115) à ladite tête d'obturation (57) de manière à être étanches à la poudre, et lequel dispositif présente en outre une réception de récipient (58) qui sert à recevoir la tête d'obturation (57) du récipient (56) et le récipient (56) présente son ouverture (56a) tournée vers le bas de sorte que la poudre (59) peut ruisseler dudit récipient (56), dans lequel entre la tête d'obturation (57) et un godet récepteur (131) de la réception de récipient (58) se trouve un interstice (200) dans lequel peut être généré un flux de gaz entre le godet récepteur (131) et la tête d'obturation (57), et la réception de récipient (58) présente une canule (134) destinée à percer la cloison (115).

2. Dispositif selon la revendication 1, **caractérisé en ce que** la section transversale de l'interstice (200) situé entre le godet récepteur (131) et la tête d'obturation (57) diminue en direction de la cloison (115) de sorte que la vitesse du flux de gaz augmente en direction de ladite cloison (115).

3. Dispositif selon l'une quelconque des revendications 1 ou 2, **caractérisé en ce que** l'interstice (200) entre le godet récepteur (131) et la tête d'obturation (57) est formé de telle sorte que la vitesse de flux est maximale au niveau de la cloison (115) et que le flux est dirigé contre la cloison (115) afin d'éliminer des particules de poudre se trouvant sur la cloison (115) et sur la tête d'obturation (57).

4. Dispositif selon l'une quelconque des revendications précédentes, **caractérisé en ce que** la tête d'obturation (57) présente un adaptateur de cloison (113) et un bouchon de cloison (114) pourvu d'une ouverture (114a), le bouchon de cloison (114) servant à presser la cloison (115) contre l'adaptateur de cloison (113).

5. Dispositif selon l'une quelconque des revendications précédentes, **caractérisé en ce que** sur la tête d'obturation (57) et le récipient (56) sont formés des éléments d'enclenchement ou à déclic complémentaires (116, 117b, c) et/ou que sur l'adaptateur de cloison (113) et le bouchon de cloison (114) sont formés des éléments d'enclenchement ou à déclic complémentaires (118, 119 b, c) lesquels forment respectivement entre eux, après la mise en place par vissage ou par glissement de la tête d'obturation (57) sur le récipient (56) et du bouchon de cloison (114) sur l'adaptateur de cloison (113), une liaison qui n'est pas ou qui n'est que difficilement amovible.

6. Dispositif selon l'une quelconque des revendications précédentes, **caractérisé en ce que** le récipient (56) est formé, à l'intérieur, en tant qu'entonnoir dans la zone qui va vers un filetage de récipient (111) et/ou que l'adaptateur de cloison (113) est formé, à l'intérieur, en tant qu'entonnoir et/ou **en ce que** le dispositif présente au moins un vibrateur (49, 50) sur ledit récipient (56) et/ou sur ledit adaptateur de cloison (113).

7. Dispositif selon l'une quelconque des revendications précédentes, **caractérisé en ce que** la canule (134) est alimentée avec un gaz destiné à fluidiser la poudre (59) qui ruisselle vers le bas, le gaz étant amené à la canule (134) de préférence par un tuyau latéral (52) et par des ouvertures (139) ménagées dans la paroi de canule.

8. Dispositif selon l'une quelconque des revendications précédentes, **caractérisé en ce que** le flux d'air est généré par l'aspiration de l'air ambiant par l'intermédiaire d'un tuyau d'aspiration (63) qui aspire de l'air se trouvant entre la tête d'obturation (57) et le godet récepteur (131) et est amené, par l'intermédiaire d'un alésage central pratiqué dans le godet récepteur (131), au raccord du tuyau d'aspiration (63) en passant le long de la canule (134).

9. Dispositif selon l'une quelconque des revendications précédentes, **caractérisé en ce que** le godet récepteur (131) de la réception de récipient (58) est pressé vers le haut contre une butée (131a) située sur un tube de guidage (130) de la réception de récipient (58) au moyen d'un élément ressort (132) et/ou **en ce que** le godet récepteur (131) est formé de telle sorte que la tête d'obturation (57) peut être insérée de manière centrée dans ledit godet récepteur (131) et/ou **en ce que** des bossages (137) et/ou des écarteurs (138) sont prévus sur la réception de récipient (58) et/ou sur la tête d'obturation (57) en vue de former l'interstice (200).

10. Dispositif selon l'une quelconque des revendications précédentes, **caractérisé en ce que** ledit dispositif présente en outre un système de dosage qui est basé sur le principe consistant à remplir, dans un tuyau de raccordement (33), un volume séparable par des soupapes (28, 31).

11. Dispositif selon la revendication 10, **caractérisé en ce qu'**au système de dosage est raccordée une tête de raccordement (34) qui peut être chauffée.

12. Dispositif selon la revendication 11, **caractérisé en ce que** la tête de raccordement (34) est reliée à une cuve de mélange (42) qui présente un canal d'amenée (160), le liquide de processus (24) étant introduit de préférence de manière tangentielle dans le canal d'amenée (160) et ledit canal d'amenée (160) présentant de préférence une protection anti-débordement (161) afin d'empêcher des dépôts de poudre sur les parois de la cuve de mélange (42).

13. Dispositif selon la revendication 10, **caractérisé en ce que** la densité apparente de la poudre (59) dans le tuyau de raccordement (33) est maintenue essentiellement constante grâce à un flux de gaz qui varie dans le temps pendant la fluidisation.

14. Dispositif selon la revendication 13, **caractérisé en ce que** le volume de gaz pendant la fluidisation fait entre 0,3 et 3,0 fois, de préférence entre 0,5 et 2,0 fois, le volume séparable à l'intérieur du tuyau de raccordement (33) et/ou **en ce que** le flux du gaz est le plus grand à la fin de la fluidisation.

15. Utilisation d'un dispositif selon l'une quelconque des revendications précédentes en vue du dosage de poudres (59) en salles blanches ou en vue du dosage de poudres (59) nocives pour la santé.

16. Utilisation selon la revendication 15 en vue du dosage d'acide borique, d'oxyde d'étain(ll) ou d'oxyde de cuivre(ll).

17. Utilisation selon la revendication 15 en vue de la fabrication de produits chimiques.

18. Utilisation selon la revendication 17 en vue de la fabrication de wafers, de circuits imprimés, de substrats ou de modules multipuce.

19. Utilisation selon la revendication 17 ou 18, **caractérisée en ce que** la fabrication est réalisée dans des conditions de salle blanche par revêtement, galvanisation, décapage, dégraissage, corrosion, précipitations ou par réactions chimiques.
